# NEUE EUROPÄISCHE PATENTSCHRIFT

(11) **EP 1 767 417 B2**
(45) Veröffentlichungstag und Bekanntmachung des Hinweises auf die Entscheidung über den Einspruch: **27.08.2014**
(45) Hinweis auf die Patenterteilung: 28.10.2009
(21) Anmeldenummer: 06020122.5
(22) Anmeldetag: 26.09.2006
(51) Int. Cl.: F01N 3/20, B60K 15/00, B60K 15/03

(54) **Verwendung eines Tanksystems mit einem Haupttank und einer Abschmelzvorrichtung mit Schmelztank**
Use of a tank system with a main tank and a melting device with a melt tank
Usage d'un système de réservoir avec un réservoir principal et un dispositif de fusion avec un réservoir de fusion

(30) Priorität: 07.07.2006 DE 202006010615 U; 26.09.2005 DE 102005046029
(43) Veröffentlichungstag der Anmeldung: 28.03.2007
(73) Patentinhaber: DBK David + Baader GmbH, Nordring 26 76761 Rülzheim (DE)
(72) Erfinder: Gschwind, Thomas, 67098 Bad Dürkheim (DE); Caspers, Michael, Dr., 69469 Weinheim (DE)
(74) Vertreter: Winter, Brandl, Fürniss, Hübner, Röss, Kaiser, Polte - Partnerschaft mbB

(56) Entgegenhaltungen:
- WO- -96/08639
- DE-A- 19 508 598
- DE-U- 20 315 852
- US-A1- 2002 088 220
- US-A1- 2005 177 969

## Beschreibung

Die Erfindung betrifft eine Verwendung eines Tanksystems zur Bereitstellung eines von einem Flüssigkeitsverbraucher nach einem Kaltstart benötigten vorbestimmten eisfreien Kaltstartvolumens einer Betriebsflüssigkeit, insbesondere einer Hamstofflösung für einen SCR-Katalysator, umfassend einen Haupttank mit einer Befüllöffnung, durch die der Tankinnenraum des Haupttanks mit Betriebsflüssigkeit betankbar ist, umfassend eine Abschmelzvorrichtung, die einen Schmelztank, der einen Schmelzeraum umschließt und eine Einlassöffnung, durch die der Schmelze raum aus dem Tankinnenraum mit der Betriebsflüssigkeit befüllbar ist, sowie eine Entnahmeöffnung aufweist, und umfassend eine Kaltstartheizung, die ein Heizelement aufweist, zur Abschmelzung im Schmelzeraum gefrorener Betriebsflüssigkeit umfasst, wobei der Schmelzeraum wenigstens so groß wie das Kaltstartvolumen und kleiner als der Tankinnenraum ist, wobei der Schmelztank am oder im Haupttank angeordnet ist. Die Erfindung betrifft ferner einen Baukasten für solche Tanksysteme.

Bei Fluidsystemen, welche eine Flüssigkeit aus einem Reservoir durch Leitungen bis zu einem Flüssigkeitsverbraucher fördern, tritt das Problem auf, dass die Flüssigkeiten in den Tanks gefrieren, wenn die Umgebungstemperaturen unter den Gefrierpunkt der zu fördernden Flüssigkeit sinken. So erstarrt insbesondere im Winter die Reinigungslösung der Scheibenwaschanlage im Tank, so dass die Heck- und Windschutzscheiben unmittelbar nach dem Kaltstart des Kraftfahrzeuges nicht gereinigt werden können.

Den Reinigungsflüssigkeiten von Scheiben- bzw. Scheinwerferwaschanlagen in Kraftfahrzeugen wird aus diesem Grund ein Frostschutzmittel zugesetzt. Allerdings senkt das Frostschutzmittel lediglich den Gefrierpunkt des Scheibenwischwassers auf ca. -20 ° C bis -17 ° C, so dass die Flüssigkeit trotz Frostschutzmittels bei Temperaturen von unter -20 ° C im Tank und den Leitungen der Scheibenwaschanlage erstarrt.

Um die Stickoxid-Emissionen in den Abgasen von Verbrennungskraftmaschinen, beispielsweise Dieselmotoren, zu senken, kann eine Abgasreinigung nach dem sogenannten SCR (selective catalytic reduction: selektive katalytische Reduktion)-Verfahren durchgeführt werden. Bei dem SCR-Verfahren werden die Stickoxide in einem Katalysator mit einem geeigneten Reduktionsmittel chemisch in die unbedenklichen Substanzen Stickstoff und Wasser umgesetzt. Als Reduktionsmittel wird dampf- bzw. gasförmiger Ammoniak verwendet, der aus einer wässrigen Harnstofflösung erzeugt und in den Abgasstrom eingebracht wird.

Unter AdBlue<> wird eine wässrige Hamstofflösung mit einem Hamstoffgehalt von 32,5 Gew.-®% zur Reduzierung der Stickoxid-Emission in Kraftfahrzeugen angeboten. Auch bei AdBlue<> besteht das Problem, dass diese Flüssigkeit unterhalb von -11 ° C im Tank der SCR-Anlage friert und nicht mehr zum Katalysator gefördert werden kann.

Daher ist es notwendig, die Kraftfahrzeugtanks von SCR-Anlagen oder Scheiben- bzw. Scheinwerferwaschanlagen mit Heizsystemen auszustatten, welche die gefrorene Flüssigkeit im Tank abschmelzen, d.h. in einen flüssigen, zum Verbraucher fließfähigen Aggregatzustand überführen.

Aus dem Stand der Technik sind Systeme bekannt, bei denen Flüssigkeitstanks in Kraftfahrzeugen von außen mit Heizfolien oder Heizmatten ummantelt sind, um die im Tank gefrorene Flüssigkeit aufzutauen.

Allerdings weisen außen an der Tankwand angebrachte Heizfolien oder Heizmatten nur sehr schlechte Wirkungsgrade auf, weil ein Grossteil der erzeugten Wärme nicht zum Abschmelzen der gefrorenen Flüssigkeit in den Tank geleitet wird, sondern an die Tankumgebung verloren geht.

Die Weiterentwicklung von Tankheizungen geht dahin, Heizschlangen im Tank unterzubringen, um die Wärmeverluste der Heizmatten zu vermeiden. Jedoch ist auch der Einsatz von Heizschlangen im Tank insofern nachteilig, als die Wärme der Heizschlangen nur auf ein relativ kleines Volumen verteilt wird. Da die Abschmelzung bei Heizschlangen hauptsächlich in unmittelbarer Nähe der Heizoberfläche stattfindet, bilden sich außerdem, wenn das Schmelzwasser abläuft, Luftschichten um den Heizkörper. Diese Luftpolster haben den Nachteil, dass sie thermisch isolierend wirken und somit der Wirkungsgrad von Heizschlangen drastisch abfällt.

Die US 2005/0177969 A1 betrifft speziell das Erwärmen einer Flüssigkeit für den Zweck der Reinigung und Enteisung eines Autofensters. Dazu ist ein erwärmbarer Behälter für Windschutzscheibenwaschflüssigkeit in Verbindung zwischen einem Waschflüssigkeitsvorratsbehälter des Autos und den Spritzköpfen angeordnet, die die Flüssigkeit auf die Windschutzscheibe spritzen, wenn sie durch einen Benutzer des Autos betätigt werden.

Die DE-U1-203 15 852 betrifft einen Behälter für die Reinigungsflüssigkeit einer Kfz-Scheibenwaschanlage. Der Behälter ist mit einer in den Behälter einsetzbaren elektrischen Heizvorrichtung versehen. Die Heizvorrichtung umfasst eine mit PTC-Elementen bestückte, elektrische Heizpatrone, die mit großflächigen, metallenen Wärmeleitelementen aus dünnen Wandelementen versehen ist.

In der DE-A1-195 08 598 ist ein Wärmetauscher für den Scheibenwaschbehälter eines Kraftfahrzeuges beschrieben. Der Wärmetauscher weist einen etwa becherförmigen Behälter mit erwärmbarer Seitenwand und Bodenwand sowie Öffnungen zum Austritt von Waschwasser auf. Zur Erwärmung weisen die seitliche Wand und der Behälterboden ein Heizwendel auf, welcher vom Kühlwasser des Fahrzeuges als Heizmedium durchströmt wird.

Erschwerend kommt außerdem hinzu, dass die Leistung bzw. die Temperatur der Heizelemente bei einer Enteisung nicht beliebig hoch sein darf. Übersteigt die Heiztemperatur den Siedepunkt der zu schmelzenden Flüssigkeit bzw. der Komponente der Flüssigkeit mit dem niedrigsten Siedepunkt, beispielsweise der Alkohol einer Scheibenwischerflüssigkeit, trifft in der Nähe der Heizflächen eine Verdampfung auf. Bei dieser Verdampfung entstehen Luftblasen, welche ebenfalls die Wärmeleitung und den Wirkungsgrad des Abschmelzens verringern. Beim Abschmelzen von wässrigen Hamstofflösungen führen Temperaturen von über 60°C zu einer thermischen Zersetzung des Harnstoffes, so dass diese Höchsttemperatur an den wärmeabgebenden Oberflächen nicht überschritten werden darf.

Aufgabe der vorliegenden Erfindung ist es, eine Verwendung eines Tanksystems einer Hamstofflösung für einen SCR- Katalysator bereitzustellen, die, selbst bei Umgebungstemperaturen unterhalb des Gefrierpunktes der Betriebsflüssigkeit, die Förderung eisfreier Betriebsflüssigkeit nach dem Kaltstart einer Anlage oder eines Kraftfahrzeuges aus dem Tanksystem zum Flüssigkeitsverbraucher gewährleistet.

Diese Aufgabe wird gemäß Anspruch 1 gelöst.

Diese überraschend einfache Lösung hat den Vorteil, dass nach dem Kaltstart der Teil des Tanksystems, nämlich der Schmelzeraum, abgeschmolzen werden muss, welcher während der Inbetriebnahme und einer Anfangszeit nach dem Kaltstart dem Flüssigkeitsverbraucher zur Verfügung stehen muss. Der Schmelzeraum bildet ein durch den Schmelztank räumlich vom Tankinnenraum des Haupttanks abgegrenztes Volumen, ist jedoch, bezogen auf den Tankinnenraum bzw. das Gesamtvolumen des Tanksystems klein, so dass eine schnelle Abschmelzung möglich ist. Da der Schmelztank die Entnahmeöffnung des Tanksystem umfasst, kann der Flüssigkeitsverbraucher nach dem Kaltstart zunächst unabhängig vom Haupttank mit einer ausreichenden Menge der Betriebsflüssigkeit versorgt werden. Die Abschmelzung der im Haupttank gefrorenen Betriebsflüssigkeit ist somit nicht für die Inbetriebnahme des Flüssigkeitsverbraucher notwendig, sondern kann vielmehr erfolgen, solange Flüssigkeit aus dem Schmelzetank zur Verfügung steht.

Das Tanksystem kann durch verschiedene, voneinander unabhängige, jeweils für sich vorteilhafte Ausgestaltungen weiterentwickelt sein, die beliebig miteinander kombiniert werden können. Auf die einzelnen Ausgestaltungen und die mit diesen Ausgestaltungen jeweils verbundenen Vorteile wird im Folgenden kurz eingegangen.

Bei einer besonders platzsparenden kompakten Ausgestaltung des Tanksystems kann die Abschmelzvorrichtung im Tankinnenraum des Haupttanks angeordnet sein. Diese Ausgestaltung hat den weiteren Vorteil, dass die von der Kaltstartheizung erzeugte Wärme über den Schmelztank in den Tankinnenraum des Haupttanks geleitet wird, den Haupttank also indirekt miterwärmt.

Eine besonders einfache Wartung und gute Zugänglichkeit der Abschmelzvorrichtung kann erreicht werden, indem die Abschmelzvorrichtung außen am Haupttank angeordnet ist.

Prinzipiell kann der Schmelztank an einer beliebigen Stelle am oder im Haupttank angeordnet sein. Vorteilhafterweise kann der Schmelztank am Boden oder am Tankmantel des Haupttanks angeordnet sein. Eine Anordnung des Schmelztanks am Boden hat den Vorteil, dass der Schmelzeraum bezogen auf die Schwerkraftrichtung am tiefsten Punkt des Tanksystems liegt. Dadurch wird gewährleistet, dass selbst bei relativ niedrigen Flüssigkeitspegeln im Tankinnenraum des Haupttanks, stets Betriebsflüssigkeit aus dem Tankinnenraum durch die Einlassöffnung des Schmelztanks in den Schmelzeraum nachströmt, wenn diesem Flüssigkeit entnommen wird, vorausgesetzt, die Betriebsflüssigkeit im Tankinnenraum ist fließfähig.

Eine besonders vorteilhafte Ausführungsform sieht vor, den Schmelztank am Boden unmittelbar unterhalb des Haupttankes anzuordnen. Durch diese Anordnung kann die Betriebsflüssigkeit aus dem Tankinnenraum des Haupttanks im Wesentlichen komplett in den Schmelzeraum des Schmelztankes überführt werden.

Die Anordnung des Schmelztanks am Tankmantel des Haupttanks bietet den Vorteil einer besseren Zugänglichkeit des montierten Tanksystems, da der Haupttank den Schmelztank der Abschmelzvorrichtung nicht abdeckt.

Wird abgeschmolzene Betriebsflüssigkeit aus dem Schmelzeraum der Abschmelzvorrichtung zum Flüssigkeitsverbraucher gefördert, ohne dass Flüssigkeit durch die Einlassöffnung aus dem Tankinnenraum des Haupttanks nachströmt, beispielsweise weil die Flüssigkeit im Tankinnenraum noch gefroren ist, bildet sich im Schmelztank ein Unterdruck. Um die Unterdruckbildung zu vermeiden, kann in einer weiteren Ausführungsform der Schmelztank ein Belüftungsventil aufweisen.

Ein im Tankinnenraum am Tankmantel angeordneter Schmelztank kann direkt über die Belüftung des Haupttanks mit belüftet werden, sofern die Einlassöffnung des Schmelztanks oberhalb des Betriebsflüssigkeitspegels im Tankinnenraum des Haupttanks liegt. Dadurch wird auf einfache Weise eine Unterdruckbildung im Schmelztank vermieden.

Der Haupttank weist eine weitere Entnahmeöffnung des Tanksystems auf. Dies ist besonders dann vorteilhaft, wenn der Schmelztank der Abschmelzvorrichtung kein eigenes Belüftungsventil aufweist, und die Einlassöffnung oberhalb des Flüssigkeitspegels im Tankinnenraum des Haupttanks angeordnet ist. Es wird lediglich so lange Betriebsflüssigkeit aus dem Schmelztank zum Flüssigkeitsverbraucher gefördert, wie der Tankinnenraum des Haupttanks noch vereist ist. Sobald auch die Betriebsflüssigkeit im Tankinnenraum abgeschmolzen ist, wird die Entnahme aus dem Schmelztank gestoppt, um Flüssigkeit stattdessen über die Weitere Entnahmeöffnung direkt aus dem Haupttank entnommen.

Fertigungstechnisch können der Haupttank und der Schmelztank der Abschmelzvorrichtung sowohl ein einstückiges Tanksystem ausbilden als auch separate Bauteile eines modularen Tanksystems sein.

Ein einstückiges Tanksystem mit Schmelztank und Haupttank ermöglicht eine einstufige Fertigung des Tanks, beispielsweise mittels Blasformverfahren. Diese Ausführung ist insbesondere vorteilhaft, wenn die Abschmelzvorrichtung im Haupttank angeordnet ist.

Ein baukastenartiges Tanksystem mit Haupttank, Schmelztank und gegebenenfalls Kaltstartheizung als separaten Bauteilen bzw. Modulen des Tanksystems hat Vorteile hinsichtlich Wartung und Variabilität.

Ist die Abschmelzvorrichtung räumlich getrennt vom Haupttank angeordnet, wobei der Tankinnenraum des Haupttanks über eine Verbindungsleitung mit der Einlassöffnung des Schmelztanks verbunden ist, ist die Montagestelle der Abschmelzvorrichtung in der Anlage oder dem Kraftfahrzeug unabhängig von der Montagestelle des im Vergleich zum Schmelztank größeren Haupttanks. So kann die Abschmelzvorrichtung entweder nahe des Flüssigkeitsverbrauchers angeordnet werden, um dem Weg von der Entnahmeöffnung zum Flüssigkeitsverbraucher so klein wie möglich zu halten. Ferner kann der Schmelztank der Abscheidevorrichtung auch im Motorraum platziert werden, um gegebenenfalls die Abwärme des Motors für die Abschmelzung gefrorener Betriebsflüssigkeit auszunutzen. Auf diese Weise kann die Kaltstartheizung als eine mit Motorkühlflüssigkeit oder Motorabgas betriebene Röhrenheizung ausgestaltet sein.

Um die Befüllung des Schmelztanks zu erleichtern und Druckverluste entlang der Ausflussrichtung der Betriebsflüssigkeit aus dem Tankinnenraum des Haupttanks durch die Einlassöffnung in den Schmelzeraum des Schmelztanks und durch die Entnahmeöffnung aus dem Schmelztank heraus zu reduzieren, kann der Schmelztank als einseitig offener Behälter ausgebildet sein. Die offene Behälterseite stellt bei dieser Ausführungsform die Einlassöffnung des Schmelztanks dar, welche fluidleitend mit dem Tankinnenraum des Haupttanks verbunden ist. Vorzugsweise ist der Schmelztank so angeordnet, dass die Einlassöffnung bzw. die offene Tankseite im Wesentlichen senkrecht zur Schwerkraftrichtung ausgerichtet sind.

Um den Montageaufwand zu verringern, kann gemäß einer weiteren vorteilhaften Ausführungsform die Kaltstartheizung an oder in der Wandung des Schmelztanks angeordnet sein. Um Wärmeverluste zu minimieren, kann die Kaltstartheizung im Schmelzeraum angeordnet sein, so dass die von der Kaltstartheizung erzeugte Wärme direkt in die gefrorene Betriebsflüssigkeit geleitet wird. Damit bereits vor oder zumindest mit dem Kaltstart der Anlage oder des Kraftfahrzeuges eine betriebsbereite Kaltstartheizung zur Verfügung steht, kann die Kaltstartheizung ein elektrisches Heizelement aufweisen. Dafür kommen neben sämtlichen elektrischen Heizvorrichtungen auch sonstige Heizungen, beispielsweise Kühlwasserschlangen oder Brennstoff betriebenen Heizsysteme in Betracht.

Um trotz einer begrenzten Heizleistung der Kaltstartheizung innerhalb einer kurzen Zeit nach dem Kaltstart einer Anlage oder eines Kraftfahrzeuges ein bestimmtes Volumen einer gefrorenen Flüssigkeit gleichmäßig aufzuheizen und schnell abzuschmelzen, kann eine besonders vorteilhafte Ausführungsform eine Kaltstartheizung zur Abschmelzung der für einen Flüssigkeitsverbraucher, wie beispielsweise einen SCR-Katalysator, bestimmten Flüssigkeit in Kraftfahrzeugtanks mit wenigstens einem im Betrieb Wärme erzeugendem Heizelement mit einer vorbestimmt begrenzten, maximalen Heizleistung und mit mindestens einem Wärmeverteilungselement, das Wärme leitend mit dem Heizelement in Verbindung steht und in den Tank ragende, sich vom Heizelement weg erstreckende Enteisungsflächen aufweist, über welche im Betrieb Wärme direkt in die im Tank gefrorene Flüssigkeit übertragbar ist, umfassen, wobei die Enteisungsflächen ein Schmelzflüssigkeitsvolumen aufspannen, dessen Inhalt mindestens einem Kaltstartvolumen abgeschmolzener Flüssigkeit entspricht, das innerhalb einer definierten Kaltstartperiode dem Flüssigkeitsverbraucher zur Verfügung stehen muss.

Dies hat den Vorteil, dass das benötigte Kaltstartvolumen abgeschmolzener Flüssigkeit durch die Anordnung und Verteilung der Enteisungsflächen im Schmelzflüssigkeitsvolumen schnell und gleichmäßig aufgeheizt und abgeschmolzen wird. Die erfindungsgemäße Lösung stellt somit eine hoch effiziente Kaltstartheizung bereit, die es ermöglicht, dass trotz einer limitierten Heizleistung zumindest das Erstbetriebsvolumen, welches bei der Inbetriebnahme des Flüssigkeitsverbrauchers innerhalb einer bestimmten Zeitdauer nach dem Kaltstart zur Verfügung stehen muss, verfügbar ist.

Gemäß einer ersten Ausgestaltung kann der Abstand zwischen Enteisungsflächen kleiner sein als ein Schmelzabstand, der durch die größtmögliche, innerhalb der Kaltstartperiode mit der vorbestimmt begrenzten, maximalen Heizleistung des Heizelementes, komplett abschmelzbaren Eisschichtdicke der zwischen Enteisungsflächen gefrorenen Flüssigkeit einer unteren Mindesttemperatur bestimmt ist. Da der Abstand von einer wärmeabstrahlenden Enteisungsfläche bis zur nächstliegenden weiteren Enteisungsfläche den Schmelzabstand nicht überschreitet, ist gewährleistet, dass die gefrorene oder erstarrte Flüssigkeit, die zwischen diesen Enteisungsflächen liegt, innerhalb der vorbestimmten Zeitdauer nach dem Kaltstart, der Kaltstartperiode, vollständig abgeschmolzen wird. Ist der Abstand zwischen den Schmelzflächen zu groß, so reicht die limitierte Heizleistung des Heizelementes nicht aus, um das Eis innerhalb des gesamten Schmelzeraumes vollständig zu verflüssigen und dem Flüssigkeitsverbraucher steht nicht die zur Betriebsaufnahme notwendige Flüssigkeitsmenge zur Verfügung.

Andererseits sollte der Abstand zwischen den Enteisungsflächen auch nicht zu gering sein, um Material zu sparen und eine unnötige Erwärmung der abgeschmolzenen Flüssigkeit zu vermeiden. Dies kann dadurch erreicht werden, dass das Abstandsverhältnis von dem Abstand zwischen Enteisungsflächen geteilt durch den Schmelzabstand größer als 0,8, vorzugsweise größer als 0,9 ist.

Ferner hat sich herausgestellt, dass es vorteilhaft ist, die Enteisungsflächen mit einer möglichst großen wärmeübertragenen Oberfläche auszugestalten und gleichmäßig im Schmelzflüssigkeitsvolumen anzuordnen. So kann gemäß einer weiteren Ausführungsform, die wärmeübertragende Oberfläche der Enteisungsflächen in Quadratzentimeter mindestens dem Schmelzflüssigkeitsvolumen in Kubikzentimeter entsprechen. Besonders vorteilhaft ist es, falls die wärmeübertragende Oberfläche der Enteisungsflächen in Quadratzentimeter mindestens dem 1,3-fachen, vorzugsweise dem 2-fachen des Schmelzflüssigkeitsvolumens in Kubikzentimeter entspricht.

Um ein Verdampfen oder ein Zersetzen der Flüssigkeit zu vermeiden, ist die Leistung des Heizelementes limitiert. Ein weiterer limitierender Faktor der maximalen Heizleistung kann ferner die Energiequelle des Kraftfahrzeuges, beispielsweise eine Autobatterie, sein. Gemäß einer weiteren vorteilhaften Ausführung kann die vorbestimmt begrenzte, maximale Leistung der erfindungsgemäßen Kaltstartheizung kleiner sein als eine mit einem Leistungsabgabefaktor von 1,4 multiplizierte Minimalschmelzleistung, die durch die kleinstmögliche, zum Abschmelzen des Kaltstartvolumens abgeschmolzener Flüssigkeit der unteren Mindesttemperatur ausreichenden und auf die Kaltstartperiode bezogenen Wärmemenge bestimmt ist. Insbesondere vorteilhaft kann eine begrenzte, maximale Leistung sein, die kleiner als die 1,2-fache vorzugsweise kleiner als die 1,15-fache Minischmelzleistung ist.

In einer vorteilhaften Ausgestaltung kann das Heizelement der Kaltstartheizung als Röhrenheizkörper oder als Kühlwasserdurchlauf ausgestaltet sein. Röhrenheizkörper sind als Standardheizelemente kostengünstig in verschiedensten Ausführungen verfügbar. Durch die Wahl des Materials und des Heizmittels kann vermieden werden, dass eine maximale Heiztemperatur, bei welcher sich Bestandteile thermolabiler Flüssigkeiten, wie beispielsweise wässrige Harnstofflösungen, zersetzen, an der Oberfläche des Heizelementes überschritten wird. Ferner liegt ein Vorteil der Ausgestaltung des Heizelementes als Heizrohr oder Durchlaufkühler darin, dass diese Heizeinrichtungen energieeffizient mit weiteren Heizkreisläufen von Kraftfahrzeugen gekoppelt werden können. Auf diese Weise kann beispielsweise die in einer Verbrennungskraftmaschine erzeugte Wärme, die beispielsweise im Abgas oder mit dem Kühlwasser abgeführt werden muss, dazu benutzt werden, die Heizleistung der Schmelzvorrichtung der erfindungsgemäßen Kaltstartheizung zur Verfügung zu stellen.

Das Heizelement ist als elektrisches Heizelement ausgestaltet. Während bei Röhrenheizkörpern die Wärmeabstrahlfläche lediglich indirekt durch das im Rohr strömende Heizfluid erwärmt wird, werden die wärmeabgebenden Enteisungsflächen elektrischer Heizkörper direkt erwärmt. Somit ist eine elektrische Heizvorrichtung in Bezug auf den Wirkungsgrad vorteilhaft.

Um eine zu starke Erwärmung der Schmelzflächen elektrischer Heizkörper und die Gefahr der thermischen Zersetzung der Flüssigkeit bzw. der Ablagerung von Kontaminationen auf den Enteisungsflächen, welche den Wärmefluss senken, zu vermeiden, kann die Kaltstartvorrichtung in einer weiteren vorteilhaften Ausführungsform ein Kaltleiter-Heizelement als elektrisches Heizelement aufweisen. Kaltleiter, auch PTC (positive temperature coefficient : positiver Temperaturkoeffizient)-Heizelemente heizen sich nur bis zu einer vorbestimmten Grenztemperatur auf, bei welcher sich der elektrische Widerstand des PTC-Elementes sprungartig erhöht und ein Aufheizen über die Grenztemperatur verhindert. Auf diese Weise sind PTC-Elemente selbstregulierend, so dass auf eine Temperatursteuereinrichtung verzichtet werden kann.

Es ist insbesondere vorteilhaft, das Heizelement als Heizpatrone, in die ein PTC-Element eingegossen oder verpresst ist, auszugestalten. Auf diese Weise erhält man ein robustes Heizelement kompakter Bauweise, das selbstregulierend und kostengünstig sowie konstruktiv einfach zu produzieren ist. Dadurch, dass ein elektrisches Heizelement innerhalb eines Patronenmantels untergebracht ist, können auch solche Materialien als Heizleiter verwendet werden, welche normalerweise nicht mit der zu schmelzenden Flüssigkeit in Berührung kommen dürfen, weil die Patronenhülse gleichzeitig eine Schutzhülle darstellt.

In einer weiteren vorteilhaften Ausführungsform kann das elektrische Heizelement im Wesentlichen als ein Heizstab oder als Rohrheizkörper ausgebildet sein. Unter Heizstab im Sinne der Erfindung ist ein im Wesentlichen geradliniger Heizkörper mit einer Schmelzachse, der Längsachse des Heizstabes oder -Rohres zu verstehen. Allerdings ist der Begriff Heizstab nicht ausschließlich auf gerade Heizkörper zu beschränken, sondern kann vielmehr auch gekrümmte Stäbe umfassen.

Die Ausführung mit einem stabförmigen Heizelement ist besonders vorteilhaft für eine weitere Ausgestaltung, bei welcher die Enteisungsflächen ein im Wesentlichen zylinder-, polyeder-, prisma- oder pyramidenförmiges sowie ellipsoides Schmelzflüssigkeitsvolumen aufspannen. Die aufgezählten Raumformen weisen allesamt eine Längsachse auf, welche der zentralen Symmetrie- bzw. Drehachse des Körpers entspricht und die sich in Richtung der größten, also der länglichen Ausdehnung des Schmelzflüssigkeitsvolumens erstreckt.

In einer vorteilhaften weiteren Ausgestaltungen kann das Heizelement im Wesentlichen zentral im Schmelzflüssigkeitsvolumen angeordnet sein, wodurch das abzuschmelzende Volumen gleichmäßig beheizt wird. Insbesondere kann das Heizelement im Wesentlichen parallel, vorzugsweise koaxial zur Längsachse des Schmelzflüssigkeitsvolumens erstrecken. Auf diese Weise gibt das längliche Heizelement über die komplette Länge des Schmelzeraumes verteilt Wärme ab. Bei der koaxialen Anordnung kommt der weitere Vorteil hinzu, dass der Heizstab zusätzlich einen annähernd konstanten Abstand, welcher der Breite des Schmelzflüssigkeitsvolumens entspricht, bis zur Mantelfläche des Schmelzflüssigkeitsvolumens besitzt. Dadurch wird erreicht, dass das komplette Schmelzflüssigkeitsvolumen gleichmäßig beheizt wird.

Das Schmelzflüssigkeitsvolumen kann folglich durch im Wesentlichen zwei räumliche Komponenten, die Länge einerseits und die Breite andererseits beschrieben werden. Gemäß einer weiteren vorteilhaften Ausführung kann die räumliche Ausdehnung des Schmelzflüssigkeitsvolumens eine Länge L entlang der Längsachse des Schmelzflüssigkeitsvolumens einerseits und eine Breite B, die dem Abstand von der Längsachse des Schmelzflüssigkeitsvolumens bis zu dessen Mantelfläche entspricht, andererseits betragen, wobei der Ausdehnungsquotient L/B im Bereich von 1 bis 8, vorzugsweise bei 3 bis 5 liegt.

Die Breite des Schmelzwasservolumens kann beispielsweise bei einer maximalen Heizleistung von 100 W bzw. 800 W 20 mm bis 35 mm, vorzugsweise 25 mm bzw. 35 mm bis 60 mm, vorzugsweise 43 mm betragen. Bei Berücksichtigung der vorteilhaften Ausdehnungsquotienten ergeben sich somit Längen des Schmelzwasservolumens von 50 mm bis 160 mm, vorzugsweise 100 mm bei 100 W maximaler Heizleistung und von 80 mm bis 260 mm, vorzugsweise 175 mm bei 800 W maximaler Heizleistung.

Überschreitet der Ausdehnungsquotient den Wert 8, so ist der Schmelzwasserraum bezogen auf seine Breite unverhältnismäßig lang. Folglich muss die begrenzte Heizleistung des Heizelementes auf eine relativ große Länge verteilt abgegeben werden.

Ist der Ausdehnungsquotient andererseits zu klein, d. h. das Schmelzflüssigkeitsvolumen ist relativ kurz und breit, besteht die Gefahr, dass im Schmelzflüssigkeitsvolumen ein Temperaturgradient auftritt. Ein breites Volumen bedeutet nämlich, dass die Enteisungsflächen der Wärmeverteilungselemente sich relativ weit von dem Heizelement aus in den Tank hinein erstrecken. Findet aber lediglich ein passives Beheizen der Enteisungsflächen durch das Heizelement statt, so heizen sich die Bereiche der Enteisungsflächen nahe des Heizelementes stärker auf als die weiter entfernt liegenden Abschnitte.

Um einen Temperaturgradient im Wärmeverteilungselement zu vermeiden, kann, gemäß einer weiteren vorteilhaften Ausführung, wenigstens ein Wärmeverteilungselement als wärmeerzeugendes weiteres Heizelement ausgestaltet sein. In diesem Fall wird die komplette Fläche eines direkt beheizten Wärmeverteilungselementes gleichmäßig erhitzt.

Gemäß einer weiteren vorteilhaften Ausführungsform können die Enteisungsflächen des wenigstens einen Wärmeverteilungselementes im Wesentlichen orthogonal zur Schmelzachse des Heizstabes angeordnet sein. Bei dieser Anordnung spannen die Enteisungsflächen das größtmögliche Schmelzflüssigkeitsvolumen auf, weil sich die Enteisungsflächen mit dem größtmöglichen Abstand ausgehend von dem Heizelement in den abzuschmelzenden Tankraum erstrecken.

In einer weiteren Ausführung können Enteisungsflächen des wenigstens einen Wärmeverteilungselementes zueinander versetzt entlang der Schmelzachse des Heizelementes angeordnet sein. Hier ist es für eine gleichmäßige Beheizung des Schmelzflüssigkeitsvolumens vorteilhaft, wenn die Enteisungsflächen in gleichen Abständen versetzt sind. Sind die verschiedenen Enteisungsflächen parallel zueinander angeordnet, so resultiert aus dem Abstand der einzelnen Flächen zueinander auch der Abstand, welcher den Schmelzabstand nicht überschreiten darf. Alternativ kann man anstatt eines Wärmeverteilungselementes mit mehreren Enteisungsflächen auch mehrere Wärmeverteilungselemente zueinander versetzt entlang der Schmelzachse des Heizelementes anordnen.

Es ist auch möglich, die Enteisungsflächen einer oder mehrerer Wärmeverteilungselemente zwar zueinander versetzt entlang des Heizstabes anzuordnen, jedoch die Neigungswinkel, welche die einzelnen Enteisungsflächen der Wärmeverteilungselemente mit dem Heizstab bilden, zu variieren.

Gemäß einer weiteren vorteilhaften Ausführungsform kann das wenigstens eine Wärmeverteilungselement als Schmelzplatte ausgeformt sein. Der Einsatz einer Schmelzplatte bietet den Vorteil, dass Wärme über eine relativ große Enteisungsfläche direkt in die gefrorene oder erstarrte Flüssigkeit übertragen werden kann. Da die Schmelzplatte gleichzeitig eine recht geringe Dicke, beispielsweise weniger als 2 mm, vorzugsweise weniger als 1 mm, aufweisen kann, ist es möglich, die komplette Schmelzplatte sehr schnell zu erwärmen. Fertigungstechnisch vorteilhaft können Ausführungsformen sein, in denen die Schmelzplatte einen im Wesentlichen runden, elliptischen oder polygonalen Umriss aufweisen.

Um die Schmelzplatte wärmeleitend am Heizelement anzuordnen, kann gemäß einer weiteren vorteilhaften Ausführungsform die Schmelzplatte eine zentrale Aufsetzöffnung aufweisen, durch welche sich das Heizelement erstreckt. Hiermit wird erreicht, dass die wärmeleitende Verbindung zwischen Heizplatte und Heizelement über den kompletten Umfang der Aufstecköffnung stattfindet. Die zentrale Anordnung der Aufstecköffnung führt dazu, dass ein gleichmäßiges Aufheizen der Enteisungsflächen der Heizplatte stattfindet. Zwar ist an dieser Stelle eine Ausführungsform mit einer zentralen Aufstecköffnung beschrieben, jedoch kann die Aufsetzöffnung selbstverständlich auch an einer beliebigen anderen Position der Heizplatte gefertigt sein.

Gemäß einer weiteren Ausführungsform kann das wenigstens eine Wärmeverteilungselement als Enteisungsband ausgebildet sein. Der Vorteil dieser Variante ist, dass lediglich ein Verteilungselement notwendig ist, welches mehrere Enteisungsflächen ausbilden kann, beispielsweise dadurch, dass das Enteisungsband mehrfach vom Heizelement weg- und wieder zurückgeführt wird.

Um eine möglichst große Kontaktfläche zwischen dem Heizelement und dem Enteisungsband zu erreichen, kann gemäß einer weiteren Ausführungsform das Heizband eine Heizschnecke bildend spiralförmig um das Heizelement gewickelt sein. In diesem Fall bietet es sich an, das Enteisungsband mit seinen flachen Seitenflächen am Heizelement anzubringen, damit die Bandbreite des Enteisungsbandes die wärmeabgebenden Heizflächen darstellen.

Die Befestigung des Wärmeverteilungselementes, wie beispielsweise einer Schmelzplatte oder eines Enteisungsbandes, am Heizelement kann vorteilhafterweise formschlüssig oder stoffschlüssig erreicht werden. So kann das Wärmeverteilungselement beispielsweise auf das Heizelement aufgesteckt oder mit dem Heizelement verschweißt werden. Die Befestigung kann aber prinzipiell auf beliebige Weise geschehen und unter anderem auch durch Verpressen, Verkleben oder Verschrauben erreicht werden.

Um ein Enteisungsband, das um einen Heizstab gewickelt ist, mehr Stabilität zu verleihen, können stabilisierende Profilierungen in das Heizband geformt sein. Die Stabilisierungsprofile können beispielsweise in Form von Längssicken oder quer zur Längsrichtung des Bandes eingestanzte Wellenprofile sein, die sich in Längsrichtung des Bandes abwechselnd aus der Ober- und Unterseite des Heizbandes erheben bzw. absenken.

Gemäß einer weiteren Ausführungsform können anstelle von Schmelzplatten oder Enteisungsbändern auch Verflüssigungsstäbe eingesetzt werden. Die Stäbe können so parallel nebeneinander angeordnet werden, dass sie im Wesentlichen der Form einer Heizplatte bzw. eines Enteisungsbandes entsprechen. Zwar gestaltet sich die Fertigung und Montage einer Kaltstartheizung mit Wärmestäben verglichen mit Heizplatten aufwendiger, jedoch steigt dann die effektive Enteisungsfläche und die Flüssigkeitsmenge, welche im Schmelzflüssigkeitsvolumen der Kaltstartheizung aufgenommen werden kann.

Unabhängig von der Form und Anordnung der Wärmeverteilungselemente können die Wärmeverteilungselemente insbesondere aus Materialien gefertigt sein, die eine gute Wärmeleitfähigkeit sowie eine geringe Masse aufweisen, wie dies beispielsweise bei Aluminium oder Kupfer sowie deren Legierungen der Fall ist. Ferner ist zu beachten, dass die Wärmeverteilungselemente selbstverständlich korrosionsbeständig hinsichtlich der zu erwärmenden Flüssigkeit sein müssen. Dies ist bei einer Kaltstartheizung für einen Flüssigharnstofftank zu berücksichtigen, da eine 32,5 %-ige Harnstofflösung leicht basisch und somit korrosiv für einige Materialien ist. In einem solchen Fall können die Wärmeverteilungselemente aus Edelstahl, beispielsweise aus legiertem Cr-Ni- oder Cr-Ni-Mo-Stahl entsprechend EN 10088-1 bis 3 bestehen.

Damit die Kaltstartheizung nur in den Fällen eingeschaltet wird, in denen die Flüssigkeit im Kraftfahrzeugtank gefroren ist, kann eine Ausführung mit einem Eissensor verwendet werden. Gemäß dieser vorteilhaften Ausführungsform kann die Kaltstartheizung eine Steuereinheit aufweisen, die mit wenigstens einem Eissensor, durch welchen der Aggregatzustand der Flüssigkeit im Tank erfassbar und ein den Aggregatzustand charakterisierendes Phasensignal an die Steuereinheit ausgebbar ist, einerseits und dem Heizelement andererseits verbunden sein, wobei durch die Steuereinheit in Abhängigkeit vom Phasensignal ein Heizsignal, welches das Heizelement aus einem Ruhezustand in den wärmeerzeugenden Betriebszustand überführt, an das Heizelement ausgebbar ist.

In einer weiteren Ausführungsform kann die Kaltstartheizung ein Verschlusselement aufweisen, das eine Aufnahmeöffnung des Tankes, durch welche das Schmelzflüssigkeitsvolumen der Kaltstartheizung entlang einer Einsetz- oder Montagerichtung in den Tank einführbar ist, fluiddicht verschließbar ausgestaltet. Diese Ausführung mit einem Verschlussmittel, welches die Aufnahmeöffnung des Tankmoduls verschließbar ausgestaltet, hat insbesondere bei einem modularen Baukasten des Kaltstartheizungssystems den Vorteil, dass die Kaltstartheizung nicht nur die geforderte gefrorene Flüssigkeitsmenge abschmilzt, sondern auch die Aufnahmeöffnung im Tank verschließt.

So kann das Verschlusselement vorzugsweise als Deckel ausgebildet sein. Die fluiddichte Verbindung des Deckels mit der Aufnahmeöffnung kann mittels bekannter Verschlussmechanismen, beispielsweise eines Schraubverschlusses, eines Bajonettverschlusses oder eines Rastverschlusses erfolgen.

Schließlich kann es ferner vorteilhaft sein, wenn das Verschlusselement eine Entnahmeöffnung aufweist, an welche eine zum Flüssigkeitsverbraucher führende Fluidleitung anschließbar oder in die eine Entnahmevorrichtung, die sich durch die Entnahmeöffnung des Verschlussmittels hindurch in das Schmelzflüssigkeitsvolumen erstreckt, einsetzbar ist. Bei dieser Alternative ist gar keine Entnahmeöffnung im Fahrzeugtank notwendig, da die Entnahmeöffnung direkt in das Verschlusselement der Kaltstartheizung integriert ist.

Ein Baukasten für ein Tanksystem zur Bereitstellung eines von einem Flüssigkeitsverbraucher nach einem Kaltstart benötigten vorbestimmten Kaltstartvolumens einer Betriebsflüssigkeit, insbesondere einer Hamstofflösung für einen SCR- Katalysator, umfasst ein Haupttankmodul mit einer Befüllöffnung, durch die der Tankinnenraum des Haupttankmoduls mit Betriebsflüssigkeit betankbar ist, sowie ein mit dem Haupttankmodul verbindbares Abschmelzmodul, das ein Schmelztankmodul, welches einen Schmelzeraum umschließt und eine Einlassöffnung, durch die der Schmelzeraum im montierten Zustand des Tanksystems aus dem Tankinnenraum mit Betriebsflüssigkeit befüllbar ist, sowie eine Entnahmeöffnung aufweist, und ein Kaltstartheizmodul zur Abschmelzung im Schmelzeraum gefrorener Betriebsflüssigkeit, das mit dem Schmelztanksmodul verbindbar ausgestaltet ist, umfasst, wobei der Schmelzeraum wenigstens so groß ist wie das Kaltstartvolumen und kleiner ist als der Tankinnenraum.

Für eine einfache Wartung kann das Schmelztankmodul vom Haupttankmodul wiederholt lösbar und fluiddicht ausgestaltet ist. Ebenso kann die Wartung verbessert werden, indem das Schmelztankmodul eine Aufnahmeöffnung umfasst und das Kaltstartheizmodul durch die Aufnahmeöffnung entlang einer Montagerichtung in das Schmelztankmodul einführbar und im Schmelztankmodul wiederholt lösbar oder unlösbar anordenbar ausgebildet sein. Dazu kann in einer weiteren Ausführung der Baukasten für das Tanksystem ein Verschlussmittel umfassen, welches die Aufnahmeöffnung des Schmelztankmoduls verschließbar ausgestaltet ist.

Vorteilhafterweise kann das Schmelztankmodul einen Schmelztankbereich begrenzen, in dem das Schmelzflüssigkeitsvolumen des Kaltstartheizmoduls im montierten Zustand angeordnet ist und dessen Volumen im Wesentlichen dem Schmelzflüssigkeitsvolumen entspricht. Ferner kann das Schmelztankmodul im Schmelztankbereich eine Entnahmeöffnung aufweisen, an die eine zum Flüssigkeitsverbrauch führende Fluidleitung anschließbar oder in die eine Entnahmevorrichtung, die sich durch die Entnahmeöffnung hindurch in das Schmelzflüssigkeitsvolumen erstreckt, einsetzbar ist.

Der Baukasten für ein Tanksystem kann ein Kaltstartheizmodul gemäß der Ausführungsform einer der oben beschriebenen Kaltstartheizungen des Tanksystems umfassen. Die Kaltstartheizung kann dabei selbst modular aufgebaut sein.

So kann ein Baukasten für ein Kaltstartheizsystem zum Abschmelzen der für einen Flüssigkeitsverbraucher, wie einen SCR-Katalysator bestimmten Flüssigkeit in Kraftfahrzeugtanks ein Tankmodul mit einer Aufnahmeöffnung und ein Kaltstartheizmodul, das durch die Aufnahmeöffnung entlang einer Montagerichtung in das Tankmodul einführbar und im Tankmodul wiederholt lösbar oder unlösbar anordenbar ist, umfassen.

In einer vorteilhaften Ausgestaltung des Baukastens für ein Kaltstartheizsystem kann das Tankmodul einen Schmelztankbereich begrenzen, in dem das Schmelzflüssigkeitsvolumen des Kaltstartheizmoduls im montierten Zustand angeordnet ist und dessen Volumen im Wesentlichen dem Schmelzflüssigkeitsvolumen entspricht. Bei dieser Ausführungsform gleicht der Schmeiztankbereich des Tankmoduls in etwa dem Kaltstartvolumen, welches vom Flüssigkeitsverbraucher benötigt wird. Somit kann der komplette Schmelztankbereich des Tankmoduls schnell abgeschmolzen werden, so dass dem Flüssigkeitsverbraucher die benötigte Menge abgeschmolzener Flüssigkeit innerhalb der Kaltstartperiode zur Verfügung steht.

Das Tankmodul weist im Schmelztankbereich eine Entnahmeöffnung auf, an die eine zum Flüssigkeitsverbrauch führende Fluidleitung anschließbar oder in die eine Entnahmevorrichtung, die sich durch die Entnahmeöffnung hindurch in das Schmelzflüssigkeitsvolumen erstreckt, einsetzbar ist, wie dies oben bereits näher erläutert wurde.

Das Baukastensystem kann ebenfalls in bereits bestehende Fluidsysteme von Kraftfahrzeugen integriert werden, wenn das Tankmodul als Zusatztankmodul ausgebildet ist, das fluidleitend mit einem Flüssigkeitstank in Verbindung steht. Damit auch in diesem Fall verschiedene Zusatztankmodule beliebig gegeneinander ausgetauscht werden können, kann das Zusatztankmodul vom Flüssigkeitstank wiederholt lösbar, beispielsweise durch einen Befestigungsflansch, ausgestaltet sein.

Die beschriebene Kaltstartheizung und das beschriebene Tanksystem werden zum Abschmelzen der für einen Flüssigkeitsverbraucher, d.h. einen SCR-Katalysator bestimmten Flüssigkeit in Kraftfahrzeugtanks verwendet. Vorteilhafterweise kann die Kaltstartheizung dazu verwendet werden, eine wässrige Harnstofflösung, vorzugsweise eine 30%ige bis 35%ige Harnstofflösung abzuschmelzen.

Im Folgenden wird die Erfindung beispielhaft mit Bezug auf die beigefügten Zeichnungen erläutert. Die unterschiedlichen Merkmale können dabei unabhängig voneinander kombiniert oder weggelassen werden, wie dies oben bei den einzelnen vorteilhaften Ausgestaltungen bereits dargelegt wurde. Es zeigen:
- Fig. 1: eine schematische Übersichtsdarstellung einer Kaltstartheizung in einem Fluidsystem umfassend einen Kraftfahrzeugtanksystem;
- Fig. 2: eine schematische Darstellung einer zweiten Ausführungsform der Kaltstartheizung;
- Fig. 3: einen Baukasten für ein Kaltstartsystem umfassend ein Tankmodul und eine Kaltstartheizung in einer dritten Ausführungsform;
- Fig.4: ein zweites Tankmodul des Baukastensystems umfassend eine Kaltstartheizung einer vierten Ausführungsform;
- Fig. 5a bis 5c: Tankmodul eines Baukastensystems gemäß weiterer Ausführungen;
- Fig. 6: eine schematische Darstellung eines Tanksystems eines im Haupttank angeordneten Schmelztanks;
- Fig. 7: eine schematische Darstellung eines weiteren Tanksystems eines im Haupttank angeordneten Schmelztanks;
- Fig. 8: eine schematische Darstellung eines weiteren Tanksystems; und
- Fig. 9: eine schematische Darstellung eines weiteren Tanksystems mit einem räumlich vom Haupttank angeordneten Schmelztank.

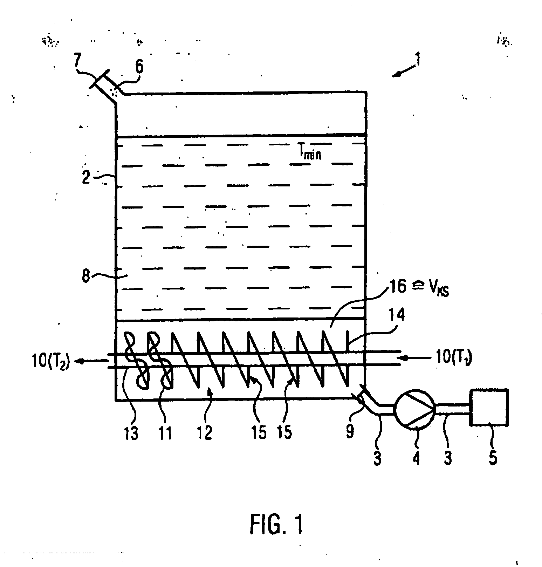

In Fig. 1 ist zunächst schematisch ein Fluidsystem 1 eines Kraftfahrzeuges gezeigt. Das Fluidsystem umfasst einen Kraftfahrzeugtank 2, eine Fluidleitung 3, beispielsweise eine Schlauch- oder Rohrleitung, eine Pumpe 4 sowie einen Flüssigkeitsverbraucher 5. Der Kraftfahrzeugtank 2 weist eine Öffnung 6 zum Befüllen des Tanks 2 mit einer Flüssigkeit 8 auf. Die Einfüllöffnung 6 des Tanks 2 ist mit einem Tankdeckel 7 verschlossen. Ferner besitzt der Tank 2 eine Entnahmeöffnung 9, an welche die Flüssigkeitsleitung 3 mit Pumpe 4 angeschlossen ist. Über die Pumpe 4 kann somit die Flüssigkeit 8 durch die Entnahmeöffnung 9 aus dem Tank 2 ausfließen, falls die Pumpe 4 die Flüssigkeit 2 durch die Rohrleitung 3 zu einem Flüssigkeitsverbraucher 2 fördert.

In Fig. 1 ist die Entnahmeöffnung 9 des Kraftfahrzeugtanks 2 lediglich beispielhaft im Bodenbereich des Tanks 2 angeordnet. Selbstverständlich kann die Flüssigkeitsentnahme an jeder beliebigen Stelle des Tanks 2 erfolgen, wobei mitunter in das Tankvolumen ragende Entnahmevorrichtungen (in Fig. 1 nicht gezeigt) eingesetzt werden.

Anwendungsbeispiele des in Fig. 1 gezeigten Fluidsystems 1 sind Katalysatorsysteme zur Reduzierung von Stickoxiden. In diesem Fall kann die Flüssigkeit 8 eine wässrige, 32,5 %-ige Harnstofflösung, die auch unter dem Namen AdBlue^{®} bekannt ist, sein, welche von einem SCR-Katalysator benötigt wird, um Stickoxide im Abgas einer Verbrennungskraftmaschine chemisch in unbedenkliche Abgase umzuwandeln. In diesem Fall ist ein SCR-Katalysator der Flüssigkeitsverbraucher 5.

Ein Problem von den in Fig. 1 gezeigten Fluidsystemen 1 in Kraftfahrzeugen ist, dass die Flüssigkeit 8 gefriert, wenn die Außentemperaturen unter den Gefrierpunkt Tₛ der Flüssigkeit sinkt. In diesem Fall ist das Fluidsystem nicht mehr funktionsfähig, weil die erstarrte Flüssigkeit 8 der Eistemperatur T_{MIN} nicht mehr zum Flüssigkeitsverbraucher 5 transportiert werden kann.

Um die gefrorene Flüssigkeit 8 im Kraftfahrzeugtank 2 wieder fließfähig zu machen, sind somit Heizeinrichtung erforderlich. In Fig. 1 ist eine erste Ausführungsform der Kaltstartheizung 12 gezeigt.

Die Kaltstartheizung 12 umfasst ein Heizelement 13 sowie ein Wärmeverteilungselement 14 und ist im Bodenbereich des Innenraums 55 des Kraftfahrzeugtanks 2 angeordnet.

Das Heizelement 13 der Fig. 1 ist als Röhrenheizkörper ausgebildet. An einem Ende des Röhrenheizkörpers 13 strömt eine Heizflüssigkeit 10 mit einer Eingangstemperatur T₁ in den Heizkörper 13 ein, strömt im Heizelement 13 durch einen Abschnitt im Inneren des Kraftfahrzeugtanks 2 und tritt schließlich am anderen Ende des Heizrohres 13 mit einer Ausgangstemperatur T₂ wieder aus. Während die Heizflüssigkeit den Rohrheizkörper 13 durchströmt, wird Wärme direkt an die im Tank 2 gefrorene Flüssigkeit 8 übertragen, da die Temperatur der Heizflüssigkeit 10 größer als die Temperatur T_{MIN} der erstarrten Flüssigkeit 8 ist.

Ein Wärmeverteilungselement 14 steht wärmeleitend mit dem Heizelement 13 in Verbindung und weist in den Tank 2 ragende, sich vom Heizelement weg erstreckende Enteisungsflächen 15 auf. Strömt nun im Betrieb der Kaltstartheizung 12 Heizflüssigkeit 10 durch das Heizrohr 13, so findet eine Wärmeleitung vom Heizkörper 13 auf die Enteisungsflächen 15 des Verteilungselementes 14 statt, so dass über die Enteisungsflächen 15 die Wärme direkt in die im Tank 2 gefrorene Flüssigkeit 8 übertragen werden kann.

Dadurch, dass die Schmelzflächen 15 in den Tank 2 ragen, spannen sie ein Schmelzflüssigkeitsvolumen 16 im Innenraum des Tanks 2 auf, welches mindestens dem Erstbetriebsvolumen V_{KS} des Flüssigkeitsverbrauches 5 entspricht.

Bei der Ausführungsform der Kaltstartheizung 12 der Fig. 1 ist das Wärmeverteilungselement 14 als Enteisungsband ausgebildet. Das Enteisungsband 14 ist spiralförmig um den Rohrheizkörper 13 so gewickelt, dass Heizelement 13 und Wärmeband 14 eine Heizschnecke bilden, die ein Schmelzflüssigkeitsvolumen 16 im Tankinnenraum aufspannt.

Um eine möglichst große Enteisungsfläche 15 zu erhalten, ist das Enteisungsband 14 so angeordnet, dass die flachen Seitenränder des Bandes 15 zumindest abschnittsweise an der Oberfläche des Heizkörpers 13 befestigt sind. Die Befestigung kann beispielsweise durch Verschweißen erfolgen.

Für mehr Stabilität und eine noch größere Enteisungsfläche 15 des Enteisungsbandes 14 können Profilierungen 11 in das Band gefertigt werden, welche die Stabilität des Bandkörpers 14 erhöhen. Möglich sind beispielsweise in Längsrichtung des Enteisungsbandes 14 gestanzte Sicken oder quer zur Längsachse des Bandes 15 abwechselnd zur Ober- und Unterseite herausragende Auswölbungen, die in Fig. 1 mit Bezugszeichen 11 angedeutet sind.

Funktion der Kaltstartheizung 12 ist es, ein Kaltstartvolumen V_{KS} möglichst schnell abzuschmelzen. Das Erstbetriebsvolumen V_{KS} ist eine vorbestimmte Flüssigkeitsmenge, beispielsweise 0,2 I bzw. 1,0 I einer AdBlue®-Lösung in Personen- bzw. Lastkraftfahrzeugen, welche dem Flüssigkeitsverbraucher 5 zur Verfügung stehen muss, damit dieser betrieben werden kann.

Da der Inhalt des Schmelzflüssigkeitsvolumens 16 der Kaltstartheizung 12 mindestens dem Betriebsstartvolumen V_{KS} entspricht, ermöglicht die Kaltstartheizung 12 somit ein dosiertes Abschmelzen einer für die Betriebsaufnahme des Flüssigkeitsverbrauchers 5 erforderlichen Fluidmenge.

Da es wünschenswert ist, die gefrorene Flüssigkeit 8 innerhalb einer definierten Kaltstartperiode t_{KS}, die sich unmittelbar an den Kaltstart des Kraftfahrzeuges anschließt, bei einer vorbestimmten unteren Mindesttemperatur T_{MIN} abzuschmelzen, ist vorgesehen, dass die Enteisungsflächen 15 des Heizbandes 14 möglichst gleichmäßig im Schmelzflüssigkeitsvolumen 16 verteilt angeordnet sind.

Hierbei hat sich gezeigt, dass ein schnelles, energieeffizientes Abschmelzen des kompletten Schmelzflüssigkeitsvolumens 16 bei einer bestimmten Mindesttemperatur T_{MIN} innerhalb einer definierten Kaltstartperiode t_{KS} trotz einer begrenzten Heizleitung des Heizelementes 13 dann erreicht werden kann, wenn die Enteisungsflächen 15 einen Abstand D aufweisen, welcher einen Schmelzabstand D_{MAX} nicht überschreitet.

Die geometrischen Abmessungen und Ausdehnung der Kaltstartheizung sind in Fig. 1 nur angedeutet und werden in den nachfolgenden Figuren detaillierter beschrieben.

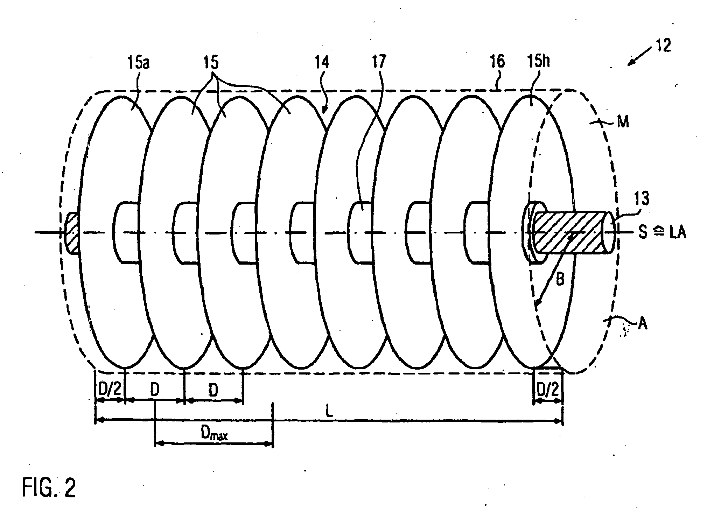

Fig. 2 zeigt eine schematische Darstellung einer zweiten Ausführungsform der Kaltstartheizung 12. Für Elemente, deren Aufbau und/oder Funktion identisch oder ähnlich Elementen der Fig. 1 ist, werden dieselben Bezugszeichen wie in Fig. 1 verwendet.

Fig. 2 zeigt eine beispielhafte Ausführung mit einem zylinderförmigen Schmelzflüssigkeitsvolumen 16, durch welches vorteilhafte Ausgestaltungen und Anordnungen der einzelnen Bestandteile der Kaltstartheizung 12 zueinander beschrieben werden.

Das Heizelement 13 der Fig. 2 ist im Wesentlichen ein Heizstab 13, der, im Gegensatz zum Rohrheizkörper der Fig. 1, als ein elektrisches Heizelement ausgebildet ist. Das elektrische Heizelement 13 ist vorzugsweise ein Kaltleiterelement (auch PTC-Element genannt), weil PTC-Elemente temperaturregulierend sind, d.h. sich nur bis zu einer Höchsttemperatur erwärmen.

Das als Abstrahlkörper eingesetzte Wärmeverteilungselement 14 der Fig. 2 ist einstückig und weist eine Schmelzhülse 17 mit plattenförmigen Enteisungsflächen 15 auf.

Die Enteisungshülse 17 ist so auf den Heizstab 13 aufgesteckt, dass der Heizkörper 13 den Innenraum der Hülse 17 ausfüllt und jeweils an den Hülsenenden herausragt. Die Hülse kann auf unterschiedlichste Weise auf dem Heizelement 13 in Richtung der Schmelzachse S des Heizstabes 13 fixiert werden. So kann die Schmelzhülse 17 beispielsweise stoffschlüssig auf den Heizkörper 13 aufgepresst werden, formschlüssig auf den Heizstab 13 aufgeschraubt werden, aber auch verklebt oder durch externe Befestigungselemente wie Befestigungsschrauben oder -ringe, welche beiderseits der Hülse angeordnet werden, gehalten werden.

Alternativ kann das Wärmeverteilungselement 14 modular aufgebaut sein und eine Schmelzhülse 17 umfassen, auf welche einzelne Enteisungsplatten 15 aufgesteckt werden. Hierbei ist vorteilhaft, dass bei einem modularen Stecksystem einerseits der Abstand D zwischen den Enteisungsflächen 15 und andererseits die Form, Dicke, Größe und oder das Material der Enteisungsplatten 15 beliebig variiert und besonders einfach an die Anforderungen der Enteisung angepasst werden können.

Unabhängig von der Befestigungsmethode ist es vorteilhaft, eine möglichst große Kontaktfläche zwischen der äußeren Oberfläche des Heizstabes 13 und der Innenwand des Enteisungsrohres 17 der Wärmeverteilungsfläche 14 zu erreichen, damit eine möglichst effiziente Wärmeübertragung vom Heizelement 13 auf die Hülse 17 erreicht wird.

Die Enteisungsflächen 15 der Fig. 2 sind als runde Schmelzplatten ausgeformt. Selbstverständlich ist die Form der Schmelzplatten 15 nicht auf einen runden Umfang beschränkt, sondern kann auch elliptisch oder polygonal sein. Bei der Fig. 2 weist das Wärmeverteilungselement acht Enteisungsflächen 15 auf, die im Wesentlichen orthogonal zur Schmelzachse S des Heizstabes 13 angeordnet sind. Dabei sind die einzelnen Heizflächen um einen Abstand D versetzt entlang der Schmelzachse S des Heizelementes 13 angeordnet.

Aufgrund der stabförmigen Ausgestaltung des Heizelementes 13 und der runden Enteisungsflächen 15, die senkrecht bezüglich des Heizstabes 13 angeordnet sind, spannen die Enteisungsflächen 15 der Fig. 2 ein im Wesentlichen zylinderförmiges Schmelzflüssigkeitsvolumen 16, in Fig. 2 durch die gestrichelte Linie dargestellt, auf.

Die räumliche Ausdehnung des Schmelzflüssigkeitsvolumens 16 wird also durch zwei Parameter bestimmt. Die Länge L des Schmelzflüssigkeitsvolumens wird im Wesentlichen durch den Abstand und die Anzahl n der Enteisungsplatten 15 festgelegt. Effektiv ist die Länge L des Schmelzflüssigkeitsvolumens 16 größer als der Abstand zwischen den endständigen Enteisungsplatten 15a und 15h, weil auch die in Richtung der oberen und unteren Stirnseite des zylinderförmigen Schmelzflüssigkeitsvolumens 16 weisenden Schmelzflächen Wärme abgeben.

Der Abstand D benachbarter Enteisungsflächen 15 im Schmelzflüssigkeitsvolumen 16 darf maximal einen Grenzabstand D_{MAX} aufweisen, bis zu dem die gefrorene Flüssigkeit (in Fig. 2 nicht dargestellt) auch in der Mitte zwischen den Enteisungsflächen 15 abgeschmolzen werden kann. Daher ragt das Schmelzflüssigkeitsvolumen 16 an den endständigen Enteisungsflächen 15a und 15h in Richtung der Stirnseiten des Schmelzwasserzylinders 16 jeweils mindestens um die Länge D/2 hinaus.

Nimmt man die Ausführung der Fig. 2, bei welcher die Enteisungsflächen 15 um den Abstand D entlang des Heizstabes angeordnet sind, entspricht die Länge L des Schmelzflüssigkeitsvolumens 16 der Anzahl n der Enteisungsflächen (hier acht), multipliziert mit dem Abstand D zwischen benachbarten Enteisungsflächen 15, also L = n • D. Die Länge L der Fig. 2 beträgt 96 mm, so dass sich ein Abstand D = 12 mm ergibt.

Der zweite Parameter, welcher das Schmelzflüssigkeitsvolumen 15 charakterisiert, ist die Breite B des Schmelzzylinders 16. Die Breite entspricht im Wesentlichen dem Abstand von der Schmelzachse S des Heizelementes 13 bzw. der Längsachse LA des Schmelzwasserzylinders 16 bis zu der Mantelfläche M des Schmelzflüssigkeitsvolumens 16. Die Breite des Schmelzflüssigkeitsvolumens 16 der Fig. 2 beträgt etwa 25 mm, wobei die Schmelzhülse einen Radius von ca. 9 mm aufweist.

Das Volumen des Schmelzeraumes 16 berechnet sich bei der Ausführung der Kaltstartheizung 12 der Fig. 2 nach der Volumenformel für Zylinder, welche Querschnittsfläche A x Zylinderlänge L beträgt, wobei die Querschnittsfläche A beim Zylinder gleich Radius (hier Breite B)² x π ist.

Das Schmelzflüssigkeitsvolumen 16 der Kaltstartheizung 12 ist jedoch nicht auf die zylinderförmige Ausgestaltung der Fig. 2 beschränkt, sondern die Enteisungsflächen 15 können eine beliebige Raumform, beispielsweise ein im Wesentlichen hexaeder-, prisma- oder pyramidenförmiges Schmelzflüssigkeitsvolumen 16 (nicht gezeigt) aufspannen. Welche räumliche Gestalt das Schmelzflüssigkeitsvolumen 16 der Kaltstartheizung 12 einnimmt, hängt maßgeblich von der räumlichen Anordnung und dem Umfang der Schmelzflächen 15 ab. Würden beispielsweise anstelle der in Fig. 2 gezeigten kreisrunden Enteisungsflächen 15 quadratische Enteisungsflächen 15 verwendet, so würde sich ein hexaederförmiges Schmelzflüssigkeitsvolumen 16 aufspannen.

Würden alternativ die Enteisungsflächen 15, im Gegensatz zur Ausführung der Fig. 2, bei denen alle runden Enteisungsflächen den gleichen Radius besitzen, entlang der Schmelzachse S sukzessiv kleiner werdende Radien aufweisen, so würde sich ein pyramidenförmiges Volumen aufspannen. Neben dem Umfang der Enteisungsflächen 15, welche in der Regel den Querschnitt A des Schmelzflüssigkeitsvolumens 16 bestimmen, gibt es auch andere Einflussfaktoren auf die räumliche Gestalt des Schmelzvolumens 16. Zu diesen Faktoren zählen beispielsweise der räumliche Verlauf des Heizelementes 13 oder der Neigungswinkel, unter welchem die Enteisungsflächen 15 bezüglich des Heizstabes 13, genauer dessen Schmelzachse S angeordnet sind. So kann beispielsweise anstelle eines geraden Heizstabes 13 auch ein gekrümmter oder U-förmiger Heizstab verwendet werden.

Damit die von dem Heizelement 13 erzeugte Wärme zum Abschmelzen der gefrorenen Flüssigkeit möglichst gleichmäßig im Schmelzflüssigkeitsvolumen 16 durch das Wärmeleitelement 14 verteilt abgegeben werden kann, ist der Heizstab 13 der Fig. 2 zentral im Schmelzflüssigkeitsvolumen 16 angeordnet. Dabei erstreckt sich der Heizkörper 13 des Schmelzstabes im Wesentlichen parallel zur Längsachse LA des Schmelzflüssigkeitsvolumens 16. Genau genommen ist der Heizstab 13 im Wesentlichen koaxial der Längsachse LA des Schmelzflüssigkeitsvolumens angeordnet.

Dadurch, dass die Schmelzachse S des Heizelementes 13 mit der Längsachse des Schmelzflüssigkeitsvolumens kongruent zusammenfällt, wird einerseits über die Länge L des Schmelzvolumens 16 gleichmäßig Wärme abgegeben. Zweitens findet auch über die Breite B des Schmelzflüssigkeitsvolumens 16 durch gleichmäßig Wärmeabstrahlung in den Schmelzeraum 16 statt.

Auch wenn bei Fig. 1 und 2 ausschließlich ebene Wärmeverteilungselemente 14 beschrieben wurden, so ist die erfindungsgemäße Kaltstartheizung 12 nicht auf ebene Wärmeverteilungselemente 14 zu begrenzen. Es können vielmehr beliebig ausgeformte Elemente, beispielsweise auch Wärmestäbe (nicht gezeigt) eingesetzt werden, welche die vom Heizelement 13 erzeugte Wärme im Schmelzflüssigkeitsvolumen 16 verteilt abgeben.

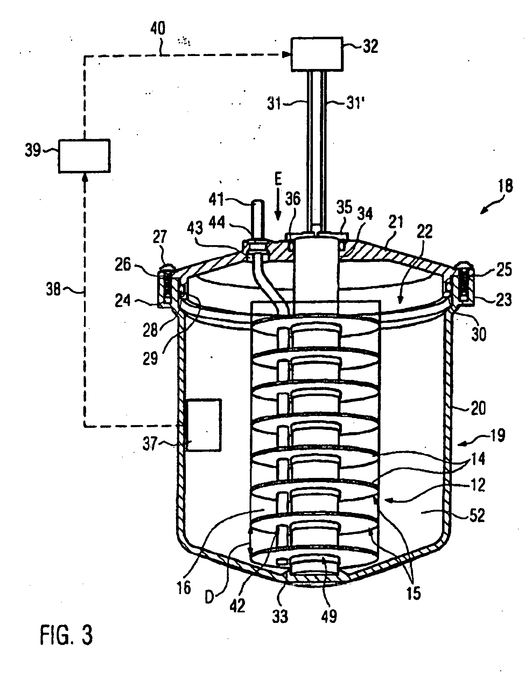

Fig. 3 zeigt einen Baukasten für ein Kaltstartheizsystem 18 zum Abschmelzen, das eine Kaltstartheizung 12 einer dritten Ausführung umfasst. Für gleiche Teile, deren Aufbau und/oder Funktion ähnlich oder identisch von Teilen der vorherigen Figuren ist, werden die gleichen Bezugszeichen verwendet. Im Folgenden wird lediglich auf die Unterschiede des modularen Kaltstartheizsystems 18 zu den Ausführungen der Fig. 1 und 2 eingegangen.

Das modulare Kaltstartheizmodul 18 der Fig. 3 umfasst ein im Folgenden auch Schmelztank genanntes Tankmodul 19 und eine Kaltstartheizung 12 in einer dritten Ausführung.

Das Tankmodul 19 der Fig. 3 begrenzt einen Schmelztankbereich 52, nachfolgend auch mit Schmelzeraum bezeichnet, und umfasst einen Tankbehälter 20 sowie einen Tankdeckel 21. Der Tankbehälter 20 ist im Wesentlichen topfförmig ausgebildet, so dass er an einer Seite eine Aufnahmeöffnung 22 aufweist, welche durch den Deckel 21 als Verschlusselement Fluiddicht abgedichtet werden kann. Der Boden des topfförmigen Tankbehälters 20 ist nicht vollkommen eben, sondern weist ein leichtes, zur Mitte des Bodens hinlaufendes Gefälle auf, so dass er eine Trichterform besitzt.

Die Aufnahmeöffnung 22 des Tanktopfes 20 ist von einem umlaufenden Rand 23 umfasst, der so ausgeformt ist, dass die Wand des Topfmantels 57 nach außen verbreitet ist. Der Tankdeckel 21 weist am Rand seiner Unterseite eine Auflagefläche 25 auf, welche am Rand 23 des Tankbehälters 20 aufliegt, wenn der Deckel 21 den Tankbehälter 20 verschließt.

Sowohl der umlaufende Rand 23 des Behälters 20 als auch die Auflagefläche 25 des Verschlussdeckels 21 sind mit Befestigungsstellen 24 bzw. 26 versehen, die zusammenfallen, wenn der Deckel 21 die Aufnahmeöffnung 22 des Tankbehälters 20 richtig verschließt. In der Fig. 3 sind die Befestigungsstellen 24 und 26 des Behälters 20 und des Deckels 21 als Bohrlöcher ausgebildet, die sich senkrecht zu der Fläche erstrecken, welche die Aufnahmeöffnung 22 aufspannt.

Liegen die Befestigungsstellen 24 und 26 übereinander, so können Befestigungsmittel 27, in der Fig. 3 Schrauben, den Tankbehälter 20 und den Tankdeckel 21 des Tankmoduls 19 fest miteinander verbinden. Die Befestigungsmittel 27 müssen selbstverständlich nicht zwangsläufig Schrauben sein, es können vielmehr beliebige Befestigungsmittel, beispielsweise auch Nieten oder Clips sowie eine Raste und Gegenraste oder ein Schraubdeckel verwendet werden. Für alle diese Befestigungen gilt, dass der Tankdeckel 21 wiederholt vom Tankbehälter 20 lösbar ist.

Auch ein Verschweißen von Tankbehälter 20 und Tankdeckel 21 ist möglich, die wiederholte Lösbarkeit entfällt dann.

Ferner muss die Verbindungsstelle zwischen Deckel 21 und Behälter 20 fluiddicht sein. Hierzu ist der Deckel 21 mit einem umlaufenden Kragen 30 versehen, der aus der Unterseite des Deckels 21 herausragt und im verschlossenen Zustand des Tankmoduls 19 an der Innenseite des Topfmantels im Bereich der Aufnahmeöffnung 22 anliegt. In die nach außen weisende Wand des umlaufenden Kragens 30 des Deckels 21 ist eine Nut 29 gefertigt, in weicher ein erstens Dichtmittel 28, hier ein O-Ring eingesetzt ist.

Eine weitere Komponente des modularen Kaltstartheizsystems 18 ist eine Kaltstartheizung 12. Die Ausführung der Kaltstartheizung 12 der Fig. 3 entspricht im Wesentlichen der Kaltstartheizung 12 der Fig. 2. Im Unterschied zu Fig. 2 ist das Heizelement 13 der Fig. 3 eine stabförmige Heizpatrone 13. In der Heizpatrone ist ein PTC-Element (nicht sichtbar) untergebracht, beispielsweise eingegossen oder verpresst, dem zwei Elektrodenkörper (in Fig. 3 nicht sichtbar) zugeordnet sind, die jeweils mit einem Anschlusselement 31 und 31' verbunden und an eine elektrische Energiequelle 32 angeschlossen sind.

Ein weiterer Unterschied der Kaltstartheizung 12 der Fig. 3 zu der Heizung der 12 der Fig. 2 ist, dass mehrere Wärmeverteilungselemente 14, genau acht Wärmeverteilungselemente 14 entlang der Längsachse der Heizpatrone 13 versetzt zueinander angeordnet sind. Die Enteisungsflächen 15 der einzelnen Wärmeverteilungselemente 14 weisen jeweils eine zentrale Durchgangs- oder Aufsetzöffnung 49 auf, durch welche sich die Heizpatrone 13 erstreckt, und an der die Verbindung zur Heizpatrone 13 erfolgt.

Die Enteisungsflächen 15 der einzelnen Wärmeverteilungselemente 14 sind einen Schmelzwasserraum 16 bildend mit einem Abstand D voneinander beabstandet angeordnet.

Wenn die Aufnahmeöffnung 22 des Tankbehälters 20 nicht vom Tankdeckel 21 verschlossen ist, kann das Kaltstartheizmodul 12 in einer Montagerichtung E in den Schmelztankbereich 52 des Tankmoduls 19 eingeführt werden. Anschließend wird der Tankdeckel 21 auf dem Tankbehälter 20 befestigt, was gleichzeitig eine Fixierung des Kaltstartheizmoduls 13 im Schmelztankbereich 52 des Tankmoduls 19 bewirkt.

In Richtung seiner Längsachse ist die Kaltstartheizung 12 einerseits dadurch festgelegt, dass das in Richtung des Tankbodens des Behälters 20 zeigende Ende des Heizelementes 13 zentral am trichterförmigen Boden anstößt. Eine Fixierung senkrecht zur Längsachse des Heizelementes 13 findet am Tankboden durch eine umlaufende Wulst 33 statt, welche das Heizelement 13 seitlich umzäunt.

Im Bereich des Tankdeckels findet die Fixierung senkrecht zur Längsachse des Heizelementes 13 dadurch statt, dass der Tankdeckel 21 eine zentrale Öffnung 34 aufweist, welche das andere Ende des Heizstabes 13 umschließt.

Die Länge der Heizpatrone 13 ist so bemessen, dass, wenn das eine Ende am Boden des Tankbehälters 20 anliegt, das andere Ende der Heizpatrone 13 bündig mit der Außenseite des auf dem Behälter 20 befestigten Deckels 21 abschließt.

Die Fixierung der Kaltstartheizung 12 entgegen der Montagerichtung E wird durch ein Fixierelement 35 gewährleistet, weiches die Befestigungsöffnung 34 fest verschließt. Das Fixierelement 35 weist zwei Öffnungen (nicht dargestellt), durch welche die Anschlussstellen 31 und 31' hindurchgehen und aus dem verschlossenen Tankmodul 19 herausragen. Die Nahtstelle zwischen Befestigungsöffnung 34 des Deckels 21 und Fixierelement 35 ist durch ein zweites Dichtelement 36, in Fig. 3 ebenfalls ein O-Ring, fluiddicht verschlossen.

Im Schmelztankbereich 52 des Tankbehälters 20 ist ein Eissensor 37 angeordnet, durch den festgestellt werden kann, ob die Flüssigkeit im Inneren des Tankmoduls 19 gefroren ist. Erkennt der Sensor 37 gefrorene Flüssigkeit, so gibt er ein Phasensignal 38, das den Aggregatzustand der Flüssigkeit beschreibt, an eine Steuereinheit 39 aus. Die Steuereinheit 39 ist so mit der elektrischen Energiequelle 32 des Kaltstartheizmoduls 12 verbunden, dass in Abhängigkeit vom Phasensignal 38 ein Heizsignal 40 an die Energiequelle 32 übertragen werden kann. Das Heizsignal sorgt dafür, dass die Heizpatrone 13 mit Strom versorgt wird, wodurch die erstarrte Flüssigkeit im Schmelzflüssigkeitsvolumen 16 abgeschmolzen wird.

Weitere Einflussgrößen, welche die Heizung steuern können, sind beispielsweise ein Zündsignal, ein Generatorzustand, wie etwa eine Unterspannung, oder die Drehzahl.

Schließlich weist das modulare Kaltstartheizsysteme 18 der Fig. 3 eine Entnahmevorrichtung 41 auf, welche es ermöglicht, die abgeschmolzene Flüssigkeit aus dem geschlossenen Tankmodul 19 heraus zu einem Flüssigkeitsverbraucher (in Fig. 3 nicht dargestellt) zu fördern. Die Entnahmevorrichtung 41 der Fig. 3 ist ein im Wesentlichen gerades Entnahmerohr 41, welches achsparallel bezüglich der Längsachse des Heizmoduls 13 angeordnet ist. Das Entnahmerohr 41 mündet im Bereich des Trichterbodens des Tankbehälters 20 innerhalb des Schmelzflüssigkeitsvolumens 16. Von der Mündung ausgehend verläuft das Entnahmerohr 41 durch Durchgangsöffnungen 42 in den Enteisungsflächen 15 der einzelnen Wärmeverteilungselemente 14 achsparallel zur Heizpatrone 13 in Richtung Tankdeckel 21.

Dadurch, dass die Durchgangsöffnungen 42 in den Enteisungsflächen 15 das Entnahmerohr 41 umschließen, findet gleichzeitig eine Beheizung des Entnahmerohres 41 statt, wenn die Heizpatrone 13 Wärme erzeugt und die Enteisungsflächen 15 beheizt.

Aus dem Inneren des Tankmoduls 19 heraus nach außen erstreckt sich die Entnahmevorrichtung 41 durch eine Entnahmeöffnung 43 im Deckel 21 des Tankmoduls 19. In der Entnahmeöffnung 43 des Deckels 21 ist wiederum ein Dichtelement 44 angeordnet, welches die Öffnung einerseits abdichtet und das Entnahmerohr 41 andererseits fixiert.

Der Vorteil eines modularen Kaltstartheizsystems 18 der Fig. 3 ist, dass man verschiedene Ausgestaltungen der Tankmodule 19 und der Kaltstartheizmodule 12 gegeneinander austauschen kann und an unterschiedliche Anforderungen zum Abschmelzen einer für einen Flüssigkeitsverbraucher bestimmten Flüssigkeit anpassen kann. So kann beispielsweise der Schmelztankbereich 52 des Tankmoduls 19 etwa 0,6 Liter betragen. Das Kaltstartschmelzmodul 12 kann ein Schmelzwassermodul von 0,2 Liter aufweisen und so ausgestaltet sein, während einer Kaftstartperiode t_{KS} von 900 Sekunden eine Flüssigkeit mit einer Mindesttemperatur Tₘᵢₙ, welche bis zu 30°K unter der Schmelztemperatur T_{S} der gefrorenen Flüssigkeit, liegt, abzuschmelzen. Aus diesen Angaben ergibt sich eine Minimalleistung (Pₘᵢₙ) von ca. 87 W, die aufgebracht werden muss, um das abzuschmelzende Eis innerhalb der 900 Sekunden auf die Schmelztemperatur zu erwärmen und dann in den flüssigen Aggregatzustand zu überführen. Hierzu kann ein Heizelement mit einer maximalen Heizleistung Pₘₐₓ von 120 Watt, vorzugsweise 100 Watt, die den 1,4- bzw. 1,15-fachen Wert der Minimalleistung aufweist, verwendet werden. Der Abstand D beträgt vorzugsweise 8 mm bis 16 mm, insbesondere 12 mm.

Das Fassungsvolumen des Tankmoduls 19 und das Schmelzflüssigkeitsvolumen 16 der Kaltstartheizung 12 sowie die maximale Heizleistung und die Geometrie der Kaltstartheizung 12 sind selbstverständlich an die Anforderungen des Flüssigkeitsverbrauchers angepasst und können beliebig variiert werden.

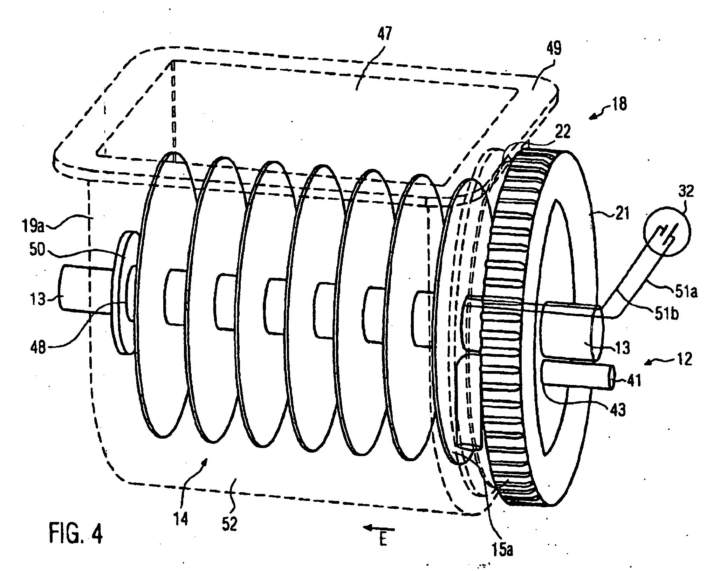

Fig. 4 zeigt eine schematische Ansicht eines modularen Kaltstartheizsystems 18 mit einem Zusatztank 19a als Tankmodul und einer im Zusatztank 19a montierten Kaltstartheizung 12 in einer vierten Ausführungsform. Für gleiche Teile, deren Aufbau und/oder Funktionen identisch von Teilen der vorherigen Figuren ist, werden die gleichen Bezugszeichen verwendet. Im Folgenden wird lediglich auf die Unterschiede der Fig. 4 zu den vorherigen Ausführungen eingegangen.

Das Tankmodul der Fig. 4 ist als Zusatztank 19a ausgebildet und umfasst eine Einlassöffnung 47 und eine Aufnahmeöffnung 22.

Die Kaltstartheizung 12 der Fig. 4 entspricht im Wesentlichen der Heizung 12 der Fig. 2. Allerdings ist bei der Fig. 4 das Heizelement 13 als Heizrohr ausgebildet, welches in einen Kühlwasserkreislauf (nicht dargestellt) integriert werden kann. Auf diese Weise können verschiedene Prozesse eines Kraftfahrzeuges miteinander gekoppelt werden. So kann beispielsweise das Kühlwasser, welches Abwärme des Verbrennungsprozesses abführt, dazu verwendet werden, die Kaltstartheizung 12 des Kaltstartheizsystems 18 mit beheizbarem Zusatztanks 19a der Fig. 4 zu erwärmen.

Die Kaltstartheizung 12 wird entlang einer Montagerichtung E durch die Aufnahmeöffnung 22 des Tankmoduls 19a in den Schmelztankbereich 52 des Tanks 19a eingeführt. Im eingebauten Zustand wird die Kaltstartheizung 12 zentral im Tankmodul 19a angeordnet und füllt den Schmelztankbereich 52 nahezu komplett aus, da der Schmelztankbereich 52 im Wesentlichen dem Schmelzflüssigkeitsvolumen 16 (in Fig. 4 nicht eingezeichnet) der Kaltstartheizung 12 entspricht.

Die Aufnahmeöffnung 22 ist durch ein dem Tankdeckel 21 der Fig. 3 entsprechendes Verschlussmittel 21 verschließbar.

In der Wand der Zusatztanks 19a, welche der Wand mit der Aufnahmeöffnung 22 gegenüberliegt, ist eine Befestigungsöffnung 48 gefertigt, durch die sich das Heizrohr 13 des Kaltstartheizers 12 der Fig. 4 erstreckt. Selbstverständlich muss dazu ein entsprechendes Dichtmittel (nicht dargestellt) die Nahtstelle zwischen Befestigungsöffnung 48 und Heizleiterrohr 13 fluiddicht verschließen. Vorzugsweise ist an dieser Stelle auch ein Befestigungsmittel 50 vorgesehen, welches die Kaltstartheizung 12 in axialer Richtung fixiert.

Der Deckel 21 kann auf verschiedene Weise, die Aufnahmeöffnung 22 verschließend, mit dem Tankmodul 19a verbunden werden. Beispiele der Befestigung sind ein Verschrauben, ein Bajonettverschluss, ein Schraubdeckel, Klemmen oder Clips.

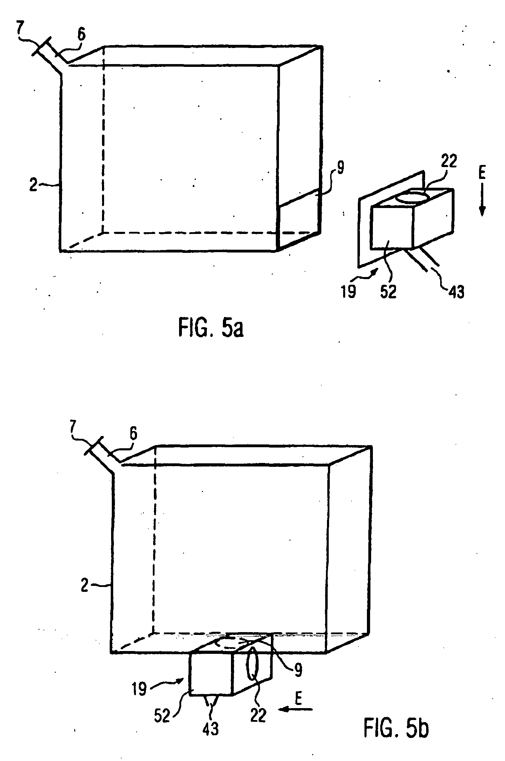

Die Einlassöffnung 47 des Zusatztankmoduls 19a nimmt eine komplette Wandfläche des Tankmoduls 19a ein und ist von einem Befestigungsabsatz 49 umgeben. Über diesen Befestigungsabsatz 49 kann der beheizte Zusatztank 45 mit einer entsprechenden Öffnung eines Flüssigkeitstanks 2 wiederholt lösbar, fluidleitend verbunden werden. So kann beispielsweise ein Flüssigkeitstank 2 eine entsprechende Entnahmeöffnung aufweisen, welche der Einlassöffnung 47 des beheizten Zusatztanks 45 entspricht, wobei der Befestigungskragen beispielsweise als Befestigungsflansch dienen kann. Selbstverständlich kann das Tankmodul 19a auch dauerhaft, d.h. nicht lösbar mit einem Flüssigkeitstank in einem Kraftfahrzeug verbunden, sein. Diese beiden Ausführungen des Baukastensystems 18 sind in den Fig. 5a und 5b angedeutet. Beiden Figuren 5a bis c werden für die Teile, dessen Aufbau und/oder Funktion ähnlich zu Teilen der vorherigen Fig. ist, dieselben Bezugszeichen verwendet.

Auf diese Weise erreicht man ein Tanksystem, bei dem das Volumen des Flüssigkeitstanks 2 um den Schmelztankbereich 52 des Zusatztankmoduls 19a, welches vorzugsweise dem Kaltstartvolumen V_{KS} des Verbrauchers entspricht erweitert wird. Das Tankmodul 19a sorgt dafür, dass kurz nach dem Kaltstart ausreichend Flüssigkeit, nämlich den abgeschmolzenen Schmelztankbereich 52 für den Flüssigkeitsverbraucher in Fig. 4 verfügbar ist.

Auch der Deckel 21 der Fig. 4 weist eine Entnahmeöffnung 43 auf, durch welche sich eine Entnahmevorrichtung 41 sich von außerhalb des Zusatztankmoduls 19a in dessen Schmelztankbereich 52 erstreckt. Die Entnahmevorrichtung 41 der Fig. 4 ist, im Gegensatz zur Vorrichtung der Fig. 3, nicht durch die Enteisungsflächen 16 hindurchgeführt, sondern knickt in einem Winkel von 90° knapp oberhalb der ersten Enteisungsfläche 15a ab und erstreckt sich bis zu im Boden des Zusatztanks 46.

Eine weitere Besonderheit der Kaltstartheizung 12 der Fig. 4 ist, dass das vom Verschlusselement 21 aus betrachtete erste Wärmeverteilungselement 14a als wärmeerzeugendes weiteres Heizelement ausgestaltet ist. Ein Zuleitungspaar 51a / 51b ist dazu an einem Ende mit einer elektrischen Energiequelle 32 verbunden. Die elektrischen Zuleitungen 51a / 51b verlaufen auf der Oberfläche des Heizelementes 13 durch das Verschlusselement 21 bis zum Wärmeverteilungselement 14a. Wird eine Spannung an der Energiequelle 32 angelegt, so fließt ein Strom durch die elektrischen Zuleitungen 51a / 51b. Das Wärmeverteilungselement 14a so in Reihe zwischen die Zuleitungen 51 / 51b geschaltet, dass der Strom ebenfalls durch das Verteilungselement 14a fließt und dieses aufheizt, wenn das Wärmeverteilungselement 14a aus einem Widerstandsmaterial hergestellt ist.

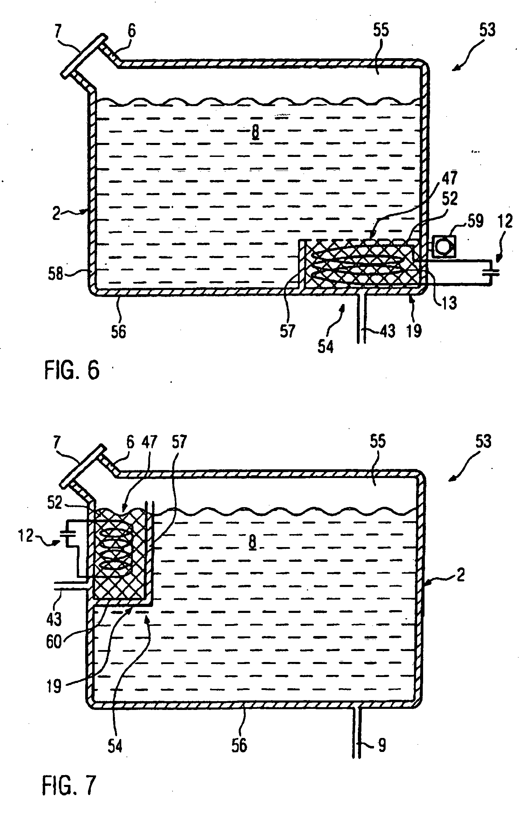

Fig. 6 zeigt eine schematische Schnittdarstellung eines Tanksystems 53 zur Bereitstellung eines von einem Flüssigkeitsverbraucher 5 nach einem Kaltstart benötigten eisfreien Kaltstartvolumens V_{KS} einer Betriebsflüssigkeit 8. Das Tanksystem 53 kann zur Bevorratung einer Harnstofflösung eingesetzt werden, die für einen SCR-Katalysator als Flüssigkeitsverbraucher 5 zur Verfügung steht. Für Teile, deren Aufbau und/oder Funktion identisch mit Teilen der vorherigen Figuren ist, werden die gleichen Bezugszeichen verwendet.

Das Tanksystem 53 umfasst einen Haupttank 2, der im Wesentlichen dem in Fig. 1 gezeigten Kraftfahrzeugtank 2 entspricht. Das Tanksystem 53 weist eine Abschmelzvorrichtung 54 mit einem Schmelztank 19 und einer Kaltstartheizung 12 auf.

Im Unterschied zum Schmelztankmodul 19 der Fig. 4 und 5a bis 5c, die separate Bauteile eines modularen Tanksystems sind, bilden der Schmelztank 19 und der Haupttank 2 in Fig. 6 ein einstückiges Tanksystem 53 aus.

Dabei ist der Schmelztank 19 der Abschmelzvorrichtung 54 im Tankinnenraum 55 des Haupttanks 2 angeordnet und umschließt den Schmelzeraum 52, der auf diese Weise vom Tankinnenraum durch den Schmelztank 19 räumlich abgegrenzt wird.

Im Wesentlichen ist der Schmelztank 19 als einseitig offener Tankbehälter ausgebildet, der im Tankinnenraum 55 am Boden 56 des Haupttanks 2 angeordnet ist. Der Schmelztankmantel 57 fasst den Schmelzeraum 52 seitlich ein und erstreckt sich im Wesentlichen senkrecht vom Tankboden 56 ausgehend in den Tankinnenraum 55 hinein.

Bei der in Fig. 6 gezeigten Ausführung grenzt der Schmelztank 19 an den Tankmantel 58 des Haupttanks 2 an und geht abschnittsweise in den Tankmantel 58 über. Der Schmelzeraum 52 in der in Fig. 6 gezeigten Ausführung wird also am Boden von einem Abschnitt des Tankbodens 56 sowie an den Seiten teilweise vom in den Tankinnenraum 55 ragenden Schmelztankmantel 57 und abschnittsweise vom Tankmantel 58 des Haupttanks 2 umschlossen.

Die dem Tankboden 56 abgewandte Seite des Schmelztanks 19 ist offen und bildet die Einlassöffnung 47, durch die der Schmelzeraum 52 aus dem Tankinnenraum 55 befüllt wird.

Auf diese Weise stellt der Schmelztank 19a einen räumlich vom übrigen Tankinnenraum 55 des Haupttanks 2 abgegrenzten Bereich des Tanksystems 52 dar, in welchem innerhalb einer kurzen Kaltstartperiode t_{KS} ein eisfreies Kaltstartvolumen V_{KS} der Betriebsflüssigkeit 8 für einen Flüssigkeitsverbraucher 8 bereitgestellt werden kann.

Der Schmelztank 19 weist dazu eine Entnahmeöffnung 43 auf, welche mit der Umgebung des Tanksystems in Verbindung steht. An die Entnahmeöffnung 43 kann, analog der Entnahmeöffnung 9 der Fig. 1, eine Flüssigkeitsleitung 3 mit einer Pumpe angeschlossen werden.

Die Kaltstartheizung 12 ist im Schmelzeraum 52 angeordnet und umfasst ein elektrisches Heizelement 13, mittels welchem der Schmelzeraum 52 innerhalb einer kurzen Kaltstartperiode t_{KS} eisfrei abgeschmolzen werden kann.

Des Weiteren weist der Schmelztank 19 in seinem Mantelabschnitt, der vom Mantel 58 des Haupttanks 2 gebildet wird, ein Belüftungsventil 59 auf. Das Belüftungsventil 59; beispielsweise ein Rückschlagventil, verhindert, dass sich im Schmelztank 19 ein Unterdruck bildet, wenn abgeschmolzene Flüssigkeit aus dem Schmelzeraum 52 über die Entnahmeöffnung 43 abtransportiert wird, ohne dass abgesaugte Flüssigkeit durch Flüssigkeit aus dem Tankinnenraum 55 durch die Einlassöffnung 47 ersetzt wird. Dies kann beispielsweise kurz nach dem Kaltstart der Fall sein, wenn die zwar die Betriebsflüssigkeit 8 im Schmelzeraum 52 abgeschmolzen, jedoch die Betriebsflüssigkeit 8 im Tankinnenraum 55 des Haupttanks 2 noch gefroren ist.

Fig. 7 zeigt eine schematische Schnittdarstellung des Tanksystems 53 in einer weiteren Ausführung. Die Ausführung entspricht im Wesentlichen der Ausführung der Fig. 6, so dass im Folgenden lediglich auf Unterschiede eingegangen wird und für gleiche Teile, deren Aufbau und/oder Funktion identisch von Teilen der vorherigen Figuren ist, die gleichen Bezugszeichen verwendet werden.

In Fig. 7 ist der Schmelztank 19 der Abschmelzvorrichtung 54 im Tankinnenraum 55 des Haupttanks 2, jedoch vom Boden 56 beabstandet ünd ausschließlich an den Tankmantel 58 angrenzend angeordnet. Dabei erstreckt sich der Schmelztankboden 60 im Wesentlichen senkrecht von dem Tankmantel 58 des Haupttanks 2 ausgehend in den Tankinnenraum 55 hinein. Seitlich ist der Schmelzeraum 52 des Schmelztanks 19 in analoger Weise zum Schmelzeraum der Fig. 6 von einem Schmelztankmantel 57 umschlossen.

Die Entnahmeöffnung 43 des Schmelztanks 19 ist, im Unterschied zur Ausführung der Fig. 6 im Schmelztankmantel 57, oberhalb des Schmelztankbodens 60 ausgebildet.

Die Einlassöffnung 47 liegt in Schwerkraftrichtung g nahe der Tankoberseite unter der Befüllöffnung 6 des Haupttanks 2. Da die Einlassöffnung 47 gemäß dieser Ausführung in der Regel über dem Betriebsflüssigkeitspegel im Haupttank 2 liegt, ist ein zusätzliches Belüftungsventil für den Schmelztank 19 nicht erforderlich.

Die Anordnung der Einlassöffnung 47 des Schmelztanks 19 in Schwerkraftrichtung g unter der Befüllöffnung 6 des Haupttanks 2 hat den Vorteil, dass Betriebsflüssigkeit 8, die in den Haupttank 2 eingefüllt wird, aus dessen Tankinnenraum 55 direkt durch die Einlassöffnung 47 in den Schmelzeraum 52 des Schmelztanks 19 eingefüllt wird.

Ferner weist das Tanksystem 53 der Fig. 7 eine weitere Entnahmeöffnung 9 am Boden 56 des Haupttanks 2 auf, wie dies in analoger Weise bei der in Fig. 1 gezeigten Ausführung dargestellt ist.

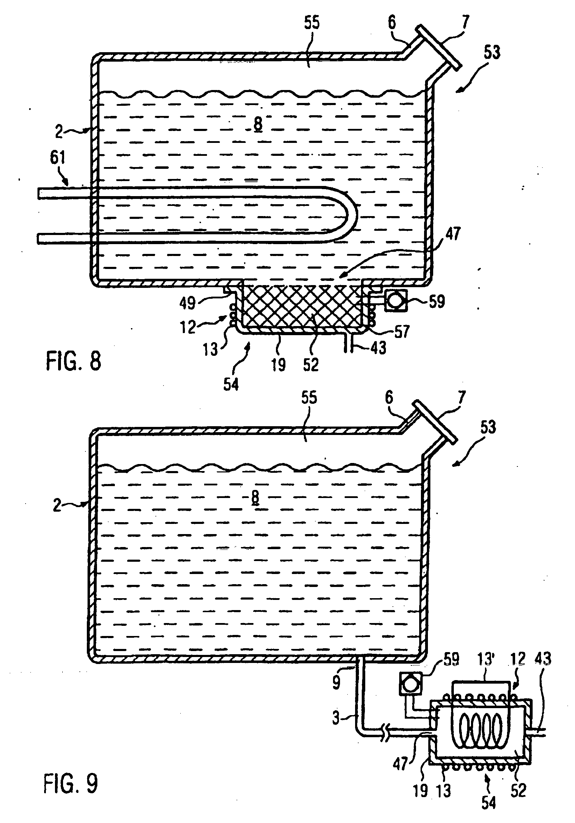

Fig. 8 zeigt eine schematische Schnittdarstellung des Tanksystems 53 in einer weiteren Ausführung, welche eine Abwandlung der in den Fig. 4, 5a und 5b gezeigten Ausführungen darstellt.

In Fig. 8 ist ein modulares Tanksystem 53 mit einem Haupttank 2 und einem Schmelztank 19 als separaten Bauteilen gezeigt. Der Haupttank 2 weist am Tankboden 56 eine Öffnung auf, die im montierten Zustand des Schmelztanks 19 am Haupttank 2 mit der Einlassöffnung 47 des Schmelztanks 19 zusammenfällt. In Fig. 8 ist der Schmelztank 19 zwar außen am Haupttank 2, im Unterschied zu den Fig. 5a und 5b, jedoch am Boden 56 angeordnet.

Der Schmelztank 19 der Fig. 8 ist, wie das in Fig. 4 gezeigten Schmelztankmodul 19, wannenförmig, also einseitig offen ausgeformt. Im Unterschied zum Schmelztank 19 der Fig. 4 umfasst der Schmelztank 19 der Fig. 7 jedoch keine Aufnahmeöffnung 22, sondern lediglich eine Entnahmeöffnung 43 im Schmelztaiikboden 60. Die Einlassöffnung 47 ist von einem Befestigungsabsatz 49 umfasst, über den der Schmelztank 19 am Haupttank 2 mit entsprechenden, in Fig. 8 nicht dargestellten Dichtmitteln angebracht.

Auf diese Weise bildet der Schmelztank 19 einen vom Tankinnenraum 55 des Haupttanks 2 räumlich getrennten und in Schwerkraftrichtung g unterhalb des Tankinnenraums 55 liegenden Schmelzeraums 52 aus.

Die Kaltstartheizung 12 umfasst ein Heizelement 13 in Form eines Röhrenheizkörpers, das an der Außenseite der Schmelztankmantel 57 angeordnet und mehrfach um den Mantel gewickelt ist.

Selbstverständlich kann alternativ oder zusätzlich auch eine im Schmelzeraum 52 angeordnete Kaltstartheizung, insbesondere in der Fig. 4 gezeigten modularen Ausführung eingesetzt werden. Es können natürlich auch elektrische Heizelemente an der Außenseite des Schmelztanks 19 angeordnet werden. Prinzipiell kann die Abschmelzung im Schmelzeraum 52 gefrorener Betriebsflüssigkeit durch jedwede Art von Heizvorrichtung erfolgen, die zumindest abschnittsweise im oder um den Schmelzeraum herum angeordnet ist.

Schließlich weist in Fig. 8 gezeigte Schmelztank in analoger Weise zur Ausführung der Fig. 7 ein Belüftungsventil 59 auf.

Damit im Tankinnenraum 55 gefrorene Betriebsflüssigkeit aus dem Haupttank 2 schnellstmöglich durch die Einlassöffnung 47 in den Schmelzeraum 52 nachströmen kann, weist das Tanksystem 53 der Fig. 8 eine weitere Heizvorrichtung 61 im Haupttank 2 zum Abschmelzen von im Tankinnenraum 55 gefrorener Betriebsflüssigkeit 8 auf.

In der gezeigten Ausführung umfasst die weitere Heizvorrichtung 61 einen Röhrenheizkörper, der eine Heizschlange bildend im Tankinnenraum 55 nahe des Bodens 56 angeordnet ist und vorzugsweise von Kühlflüssigkeit, die durch den Dieselmotor erwärmt worden ist, betrieben wird. Ebenso sind auch hier elektrische Heizsysteme möglich.

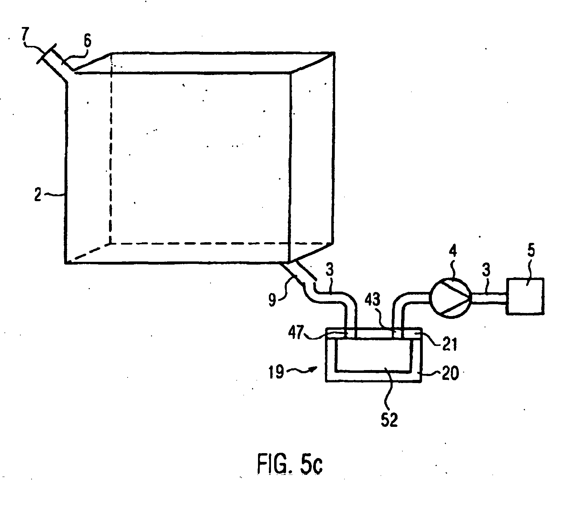

Fig. 9 zeigt schließlich eine weitere Ausführung des Tanksystems, die im Wesentlichen der Ausführung der Fig. 5c entspricht. Die Abschmelzvorrichtung 54 ist dabei räumlich vom Haupttank 2 getrennt angeordnet. So kann der Haupttank 2 beispielsweise in der Reserveradmulde eines Kraftfahrzeuges und die Abschmelzvorrichtung 54 im Motorraum in der Nähe der Pumpe bzw. der Dosiereinheit bzw. des Flüssigkeitsverbrauchs untergebracht werden.

Der Tankinnenraum 55 des Haupttanks ist über eine Verbindungsleitung 3 mit der Einlassöffnung 47 des Schmelztanks 19 verbunden Die Verbindungsleitung 3 erstreckt sich von einer Entnahmeöffnung 9 im Boden des Haupttanks bis zur Einlassöffnung 47 des Schmelztanks 57. Auf diese Weise kann der Schmelzeraum 52 aus dem Tankinnenraum 55 des Haupttanks 2 mit Betriebsflüssigkeit 8 gefüllt werden, da eine fluidleitende Verbindung in Ausflussrichtung vom Tankinnenraum 55 durch die Entnahmeöffnung 9 des Haupttanks 2 über die Fluidleitung 3 durch die Einlassöffnung 47 in den Schmelzeraum 52 gewährleistet ist.

Die Kaltstartheizung 12 der Abschmelzvorrichtung 54 kann sowohl im Schmelzeraum 52 als auch zusätzlich oder alternativ außen am Schmelztank 19 angeordnet sein und sowohl ein elektrisches Heizelement wie auch jedes beliebige sonstige Heizelement aufweisen.

Die obigen Ausführungen stellen lediglich beispielhafte Ausgestaltungen dar, deren Merkmale beliebig kombiniert oder modifiziert werden können. So ist es beispielsweise möglich, sämtliche Enteisungsflächen 15 der Wärmeverteilungselemente 14 auch direkt und aktiv zu beheizen, um einen eventuellen Temperaturgradienten in den Enteisungsflächen 15 zu vermeiden. Ferner kann auch das Tankmodul 19 des Baukastensystems 18 der Fig. 3 eine Einlassöffnung 47 aufweisen, welche fluidleitend mit einer Entnahmeöffnung 9 eines Flüssigkeitstanks verbunden werden kann, wie in Fig. 5c und Fig. 9 angedeutet.

Ferner ist die modulare Ausführung mit einem Haupttank- 2 und einem Schmelztankmodul 19 nicht nur bei den in den Fig. 5a bis 5c, 8 und 9 gezeigten Ausführungen möglich. Es kann auch ein Schmelztankmodul 19 im Tankinnenraum 55 angeordnet und mit dem Haupttank 2 ein fluiddichtes Tanksystem bildend verbunden werden. Ebenso können auch ein Haupttank 2 mit außen am Haupttank 2 angeordneten Schmelztank 19 als einstückiges Tanksystem ausgebildet sein.

Schließlich ist der Einsatz der Heizeinrichtung nicht nur auf den Kaltstartvorgang beschränkt. Ebenso ist eine Funktion der Heizeinrichtung auch beim Vereisen der Flüssigkeit im Tank während des Betriebes, wie beim Absinken der Umgebungstemperatur, möglich.

## Patentansprüche

1. Verwendung eines Tanksystems (53) zur Bereitstellung eines von einem Flüssigkeitsverbraucher (5) nach einem Kaltstart benötigten vorbestimmten Kaltstartvolumens (V_{KS}) einer als Betriebsflüssigkeit (8) vorgesehenen Harnstoffiösung für einen SCR-Katalysator, umfassend einen Haupttank (2) mit einer Befüllöffnung (6), durch die der Tankinnenraum (55) des Haupttanks (2) mit Betriebsflüssigkeit (8) betankbar ist, umfassend eine Abschmelzvorrichtung (18, 54), die einen Schmelztank (19, 19a), der einen Schmelzraum (52) umschließt und eine Einlassöffnung (57), durch die der Schmelzeraum (52) aus dem Tankinnenraum (55) mit der Betriebsflüssigkeit (8) befüllbar ist, sowie eine Entnahmeöffnung (43) aufweist, und umfassend eine Kaltstartheizung (12), die ein Heizelement (13) zur Abschmelzung im Schmelzeraum (52) gefrorener Betriebsflüssigkeit umfasst, wobei der Schmelzeraum (52) wenigstens so groß wie das Kaltstartvolumen (V_{KS}) und kleiner als der Tankinnenraum (55) ist, wobei der Schmelztank (19,19a) am oder im Haupttank angeordnet ist, wobei die Kaltstartheizung (12) ein elektrisches Heizelement (13) aufweist und eine Entnahmeöffnung (43) des Schmelztanks (19, 19a) eine Entnahmeöffnung des Tanksystems (53) ist, die direkt mit der Umgebung des Tanksystems (53) in Verbindung steht, wobei der Haupttank (2) eine weitere Entnahmeöffnung (9) des Tanksystems (53) aufweist, und wobei lediglich so lange Betriebsflüssigkeit aus dem Schmelztank zum Flüssigikeitsverbraucher gefördert wird, wie der Tankinnenraum des Haupttanks noch vereist ist, und die Entnahme aus dem Schmelztank gestoppt wird, sobald auch die Betriebsflüssigkeit im Tankinnenraum abgeschmolzen ist, um Flüssigkeit stattdessen über die weitere Entnahmeöffnung (9) direkt aus dem Haupttank zu entnehmen.

2. Verwendung gemäß Anspruch 1, **dadurch gekennzeichnet, dass** die Kaltstartheizung (12) zur Abschmelzung der für den Flüssigkeitsverbraucher (5) bestimmten Flüssigkeit (8) in Kraftfahrzeugtanks (2) das im Betrieb wärmeerzeugende Heizelement (13) mit einer vorbestimmt begrenzten, maximalen Heizleistung (Pₘₐₓ) und mindestens ein Wärmeverteilungselement (14) umfasst, das wärmeleitend mit dem Heizelement (13) in Verbindung steht und in den Tank (2) ragende, sich vom Heizelement weg erstreckende Enteisungsflächen (15) aufweist, über welche im Betrieb Wärme direkt in die im Tank (2) gefrorene Flüssigkeit (8) übertragbar ist, wobei die Enteisungsflächen (15) ein Schmelzflüssigkeitsvolumen (16) aufspannen, dessen Inhalt mindestens einem Kaltstartvolumen (V_{KS}) abgeschmolzener Flüssigkeit entspricht, das innerhalb einer definierten Kaltstartperiode (t_{KS}) dem Flüssigkeitsverbraucher (5) zur Verfügung stehen muss, wobei das Heizelement (13) als elektrisches Heizelement (13) ausgestaltet ist, und dass der Abstand (D) zwischen Enteisungsflächen (15) kleiner ist als ein Schmelzabstand (Dₘₐₓ), der durch die größtmögliche, innerhalb der Kaltstartperiode (t_{KS}) mit der vorbestimmt begrenzten, maximalen Heizleistung (Pₘₐₓ) des Heizelementes (13), komplett abschmelzbaren Eisschichtdicke der zwischen Enteisungsflächen (15) gefrorenen Flüssigkeit (8) einer unteren Mindesttemperatur (Tₘᵢₙ) bestimmt ist.

3. Verwendung gemäß Anspruch 1 oder 2, **dadurch gekennzeichnet, dass** die Abschmelzvorrichtung (54) im Tankinnenraum (55) des Haupttanks (2) angeordnet ist.

4. Verwendung gemäß Anspruch 1 oder 2, **dadurch gekennzeichnet, dass** die Abschmelzvorrichtung (54) außen am Haupttank (2) angeordnet ist.

5. Verwendung gemäß Anspruch 3 oder 4, **dadurch gekennzeichnet, dass** der Schmelztank (19) am Boden (56) des Haupttanks (2) angeordnet ist.

6. Verwendung (53) gemäß Anspruch 3 oder 4, **dadurch gekennzeichnet, dass** der Schmelztank (19) am Tankmantel (58) des Haupttanks (2) angeordnet ist.

7. Verwendung (53) gemäß einem der Ansprüche 1 bis 6, **dadurch gekennzeichnet, dass** der Schmelztank (19) kein Belüftungsventil aufweist.

8. Verwendung (53) gemäß einem der oben genannten Ansprüche, **dadurch gekennzeichnet, dass** der Schmelztank (19) einseitig offen ausgebildet ist.

9. Verwendung (53) gemäß einem der oben genannten Ansprüche 1 bis 8, **dadurch gekennzeichnet, dass** der Schmelztank (19) ein Belüftungsventil (59) aufweist.

10. Verwendung (53) gemäß einem der oben genannten Ansprüche, **dadurch gekennzeichnet, dass** der Schmelztank (19) und der Haupttank (2) ein einstückiges Tanksystem (53) ausbilden.

11. Verwendung (53) gemäß einem der oben genannten Ansprüche, **dadurch gekennzeichnet dass** der Schmelztank (19) und der Haupttank (2) separate Bauteile eines modularen Tanksystems (53) sind.

12. Verwendung (53) gemäß einem der oben genannten Ansprüche, **dadurch gekennzeichnet, dass** die Kaltstartheizung (12) im Schmelzeraum (52) angeordnet ist.

13. Verwendung (53) gemäß einem der oben genannten Ansprüche, **dadurch gekennzeichnet, dass** die Kaltstartheizung (12) an der Außenwand des Schmelztanks (19)angeordnet ist.

14. Verwendung (53) gemäß einem der oben genannten Ansprüche, **dadurch gekennzeichnet dass** das Tanksystem (53) eine weitere Heizvorrichtung (61) zum Abschmelzen von im Tankinnenraum (55) gefrorener Betriebsflüssigkeit aufweist.

15. Verwendung gemäß Anspruch 2, **dadurch gekennzeichnet, dass** das Abstandsverhältnis (D/Dₘₐₓ) größer als 0,8, vorzugsweise größer als 0,9 ist.

16. Verwendung gemäß Anspruch 2, **dadurch gekennzeichnet, dass** die wärmeübertragende Oberfläche der Enteisungsflächen (15) in cm2 mindestens dem Schmelzflüssigkeitsvolumen (16) in cm3 entspricht.

17. Verwendung gemäß Anspruch 16, **dadurch gekennzeichnet dass** die wärmeübertragende Oberfläche der Enteisungsflächen (15) in cm² mindestens dem 1,3-fachen, vorzugsweise dem 2-fachen des Schmelzflüssigkeitsvolumens (16) in cm³ entspricht.

18. Verwendung gemäß Anspruch 2, **dadurch gekennzeichnet, dass** die vorbestimmt begrenzte, maximale Leistung (Pₘₐₓ) kleiner ist als eine mit einem Leistungsabgabefaktor von 1,4 multiplizierte Minimalschmelzleistung (Pₘᵢₙ), die durch die kleinstmögliche, zum Abschmelzen des Kaltstartvolumens (V_{KS}) abgeschmolzener Flüssigkeit der unteren Mindesttemperatur (Tₘᵢₙ) ausreichenden und auf die Kaltstartperiode (t_{KS}) bezogenen Wärmemenge bestimmt ist.

19. Verwendung gemäß Anspruch 18, **dadurch gekennzeichnet, dass** der Leistungsabgabefaktor kleiner als 1,2, vorzugsweise kleiner als 1,15 ist.

20. Verwendung gemäß Anspruch 2, **dadurch gekennzeichnet, dass** das elektrische Heizelement (13) ein PTC-Heizelement ist.

21. Verwendung gemäß Anspruch 2, **dadurch gekennzeichnet, dass** das elektrische Heizelement (13) ein Rohrheizkörper ist

22. Verwendung gemäß einem der Ansprüche 2 oder 15 bis 21 **dadurch gekennzeichnet, dass** Heizelement (13) im Wesentlichen als Heizstab (13) ausgebildet ist.

23. Verwendung gemäß einem der Ansprüche 2 oder 15 bis 22, **dadurch gekennzeichnet, dass** die Enteisungsflächen (15) ein im Wesentlichen zylinder-, hexaeder-, prisma- oder pyramidenförmiges Schmelzflüssigkeitsvolumen (16) aufspannen.

24. Verwendung gemäß einem der Ansprüche 2 oder 15 bis 23, **dadurch gekennzeichnet, dass** das Heizelement (13) im Wesentlichen zentral im Schmelzflüssigkeitsvolumen (16) angeordnet ist.

25. Verwendung gemäß einem der Ansprüche 2 oder 15 bis 24, **dadurch gekennzeichnet, dass** sich das Heizelement (13) im Wesentlichen parallel zur Längsachse (LA) des Schmelzflüssigkeitsvolumens (16) erstreckt.

26. Verwendung für ein Tanksystem gemäß Anspruch 25, **dadurch gekennzeichnet, dass** das Heizelement (13) im Wesentlichen koaxial zur Längsachse (LA) des Schmelzflüssigkeitsvolumens (16) angeordnet ist.

27. Verwendung gemäß einem der Ansprüche 2 oder 15 bis 26, **dadurch gekennzeichnet, dass** die räumliche Ausdehnung des Schmelzflüssigkeitsvolumens (16) eine Länge (L) entlang der Längsachse (LA) des Schmelzeflüssigkeitsvolumens (16) einerseits und eine Breite (B), die dem Abstand der Längsachse (LA) des Schmelzflüssigkeitsvolumens (16) bis zu dessen Mantelfläche (M) entspricht, andererseits beträgt und der Ausdehnungsquotient ÜB im Bereich von 1 bis 8 , vorzugsweise bei 3 bis 5 liegt.

28. Verwendung gemäß einem der Ansprüche 2 oder 15 bis 27, **dadurch gekennzeichnet, dass** wenigstens ein Wärmeverteilungselement (14a) als wärmeerzeugendes weiteres Heizelement (13) ausgestaltet ist.

29. Verwendung gemäß einem der Ansprüche 2 oder 15 bis 28, **dadurch gekennzeichnet, dass** die Enteisungsflächen (15) des wenigstens einen Wärmeverteilungselementes (14) im Wesentlichen orthogonal zur Schmelzachse (S) des Heizelementes (13) angeordnet sind.

30. Verwendung gemäß Anspruch 29, **dadurch gekennzeichnet, dass** Enteisungsflächen (15) des wenigstens einen Wärmeverteilungselementes (14) zueinander versetzt entlang der Schmelzachse (S) des Heizelementes (13) angeordnet sind.

31. Verwendung gemäß einem der Ansprüche 2 oder 15 bis 30, **dadurch gekennzeichnet, dass** die Enteisungsfläche (15) als Schmelzplatte (15) ausgeformt ist.

32. Verwendung gemäß Anspruch 31, **dadurch gekennzeichnet, dass** die Schmelzplatte (15) einen im Wesentlichen runden, elliptischen oder polygonalen Umfang aufweist.

33. Verwendung gemäß Anspruch 31 oder 32, **dadurch gekennzeichnet, dass** die Schmelzplatte (15) eine zentrale Aufsetzöffnung (49) aufweist, durch welche sich das Heizelement (13) erstreckt.

34. Verwendung gemäß einem der Ansprüche 2 oder 15 bis 33, **dadurch gekennzeichnet, dass** das wenigstens eine Wärmeverteilungselement (14) als Enteisungsband (14) ausgebildet ist.

35. Verwendung gemäß Anspruch 34, **dadurch gekennzeichnet, dass** das Enteisungsband (14) eine Heizschnecke bildend spiralförmig um das Heizelement gewickelt ist.

36. Verwendung gemäß einem der Ansprüche 2 oder 15 bis 35, **dadurch gekennzeichnet, dass** die Kaltstartheizung (12) eine Steuereinheit (39) aufweist, die mit wenigstens einem Eissensor (37), durch welchen der Aggregatzustand der Flüssigkeit (8) im Tank (2, 19, 46) erfassbar und ein den Aggregatzustand charakterisierendes Phasensignal (38) an die Steuereinheit (39) ausgebbar ist, einerseits und dem Heizelement (13) andererseits verbunden ist, wobei durch die Steuereinheit (39) in Abhängigkeit vom Phasensignal (38) ein Heizsignal (40), welches das Heizelement (13) aus einem Ruhezustand in einen wärmeerzeugenden Betriebszustand überführt, an das Heizelement (13) ausgebbar ist.

37. Verwendung gemäß einem der Ansprüche 2 oder 15 bis 36, **dadurch gekennzeichnet, dass** die Kaltstartheizung (12) ein Verschlusselement (21) aufweist, das eine Aufnahmeöffnung (22), durch welche das Schmelzflüssigkeitsvolumen (16) der Kaltstartheizung (12) entlang einer Montagerichtung (E) in den Tank einführbar ist, des Tankes fluiddicht verschließbar ausgestaltet.

38. Verwendung gemäß Anspruch 37, **dadurch gekennzeichnet, dass** das Verschlusselement (21) als Deckel (21) ausgebildet ist.

39. Verwendung gemäß Anspruch 37 oder 38, **dadurch gekennzeichnet, dass** das Verschlusselement (21) eine Entnahmeöffnung (43) aufweist, an welche eine zum Flüssigkeitsverbraucher (5) führende Fluidleitung (3) anschließbar oder in die eine Entnahmevorrichtung (41), die sich durch die Entnahmeöffnung (43) des Verschlusselementes (21) hindurch in das Schmelzflüssigkeitsvolumen (16) erstreckt, einsetzbar ist.

## Claims

1. Use of a tank system (53) for providing a pre-determined cold start volume (V_{cs}) of a urea solution for a SCR catalyst converter provided as an operating fluid (8) required by a fluid consumer (5) after a cold start, comprising a main tank (2) with a filling opening (6) by means of which the tank interior (55) of the main tank (2) can be filled with operating fluid (8), comprising a melting apparatus (18, 54) which has a melting tank (19, 19a) which surrounds a melting space (52) and an inlet opening (57) by means of which the melting space (52) can be filled from the tank interior (55) with the operating fluid (8), and a removal opening (43), and comprising a cold start heating system (12) which has a heating element (13) for melting operating fluid frozen in the melting space (52), the melting space (52) being at least as big as the cold start volume (V_{cs}) and smaller than the tank interior (55), the melting tank (19, 19a) being disposed on or in the main tank, wherein the cold start heating system (12) has an electric heating element (13), and a removal opening (43) of the melting tank (19, 19a) is a removal opening of the tank system (53) which is directly connected to the surroundings of the tank system (53), wherein the main tank (2) has a further removal opening (9) of the tank system (53), and wherein operating fluid is conveyed out of the melting tank to the fluid consumer as long as the tank interior of the main tank is still frosted, and the removal from the melting tank is stopped as soon as the operating fluid in the tank interior of the main tank is melted, to take fluid instead via the further removal opening (9) directly from the main tank.

2. Use according to Claim 1, **characterised in that** the cold starting heating system (12) for melting the fluid (8) specified for the fluid consumer (5) in motor vehicle tanks (2) comprises the heat element (13) producing heat during operation with a pre-determined limited maximum heat output (Pₘₐₓ) and at least one heat distribution element (14) which is connected such as to convey heat to the heating element (13) and has de-icing surfaces (15) projecting into the tank (2) and extending away from the heating element by means of which heat can be transferred directly into the fluid (8) frozen in the tank (2) during operation, the de-icing surfaces (15) spanning a volume of melting fluid (16) the content of which corresponds at the very least to a cold start volume (V_{cs}) of melted fluid which must be available to the fluid consumer (5) within a defined cold start period (t_{cs}), the heating element (13) being in the form of an electric heating element (13), and that the distance (D) between de-icing surfaces (15) is smaller than a melting distance (Dₘₐₓ) which is determined by the largest possible ice layer thickness of the fluid (8) frozen between de-icing surfaces (15) of a lower minimum temperature (Tₘᵢₙ) which can be completely melted within the cold start period (t_{cs}) with the pre-determined limited maximum heat output (Pₘₐₓ) of the heating element (13).

3. Use according to Claim 1 or 2, **characterised in that** the melting apparatus (54) is disposed within the tank interior (55) of the main tank (2).

4. Use according to Claim 1 or 2, **characterised in that** the melting apparatus (54) is disposed outside on the main tank (2).

5. Use according to Claim 3 or 4, **characterised in that** the melting tank (19) is disposed on the floor (56) of the main tank (2).

6. Use (53) according to Claim 3 or 4, **characterised in that** the melting tank (19) is disposed on the tank cladding (58) of the main tank (2).

7. Use (53) according to any of Claims 1 to 6, **characterised in that** the melting tank (19) does not have a ventilation valve.

8. Use (53) according to any of the above-specified claims, **characterised in that** the melting tank (19) is designed to be open on one side.

9. Use (53) according to any of the above-specified Claims 1 to 8, **characterised in that** the melting tank (19) has a ventilation valve (59).

10. Use (53) according to any of the above-specified claims, **characterised in that** the melting tank (19) and the main tank (2) form a one-piece tank system (53).

11. Use (53) according to any of the above-specified claims, **characterised in that** the melting tank (19) and the main tank (2) are separate components of a modular tank system (53).

12. Use (53) according to any of the above-specified claims, **characterised in that** the cold start heating system (12) is disposed within the melting space (52).

13. Use (53) according to any of the above-specified claims, **characterised in that** the cold start heating system (12) is disposed on the outer wall of the melting tank (19).

14. Use (53) according to any of the above-specified claims, **characterised in that** the tank system (53) has a further heating apparatus (61) for melting operating fluid frozen in the tank interior (55).

15. Use according to Claim 2, **characterised in that** the distance ratio (D/Dₘₐₓ) is greater than 0.8 or preferably greater than 0.9.

16. Use according to Claim 2, **characterised in that** the heat-transferring surface of the de-icing surfaces (15) in cm² corresponds at the very least to the volume of melting fluid (16) in cm³.

17. Use according to Claim 16, **characterised in that** the heat-transferring surface of the de-icing surfaces (15) in cm² corresponds at the very least to 1.3 times, preferably twice the volume of melting fluid (16) in cm³.

18. Use according to Claim 2, **characterised in that** the predetermined limited maximum output (Pₘₐₓ) is smaller than a minimum melting output (Pₘᵢₙ) multiplied by an output delivery factor of 1.4 which is determined by the smallest possible quantity of heat sufficient for melting the cold start volume (V_{cs}) of melting fluid of the lower minimum temperature (Tₘᵢₙ) and in relation to the cold start period (t_{cs}).

19. Use according to Claim 18, **characterised in that** the output delivery factor is smaller than 1.2, preferably smaller than 1.15.

20. Use according to Claim 2, **characterised in that** the electric heating element (13) is a PTC heating element.

21. Use according to Claim 2, **characterised in that** the electric heating element (13) is a tubular heating body.

22. Use according to any of Claims 2 or 15 to 21, **characterised in that** the heating element (13) is substantially in the form of a heating rod (13).

23. Use according to any of Claims 2 or 15 to 22, **characterised in that** the de-icing surfaces (15) span a substantially cylindrical, hexahedron-, prism- or pyramid-shaped volume of melting fluid (16).

24. Use according to any of Claims 2 or 15 to 23, **characterised in that** the heating element (13) is disposed substantially centrally within the volume of melting fluid (16).

25. Use according to any of Claims 2 or 15 to 24, **characterised in that** the heating element (13) extends substantially parallel to the longitudinal axis (LA) of the volume of melting fluid (16).

26. Use according to Claim 25, **characterised in that** the heating element (13) is disposed substantially coaxially to the longitudinal axis (LA) of the volume of melting fluid (16).

27. Use according to any of Claims 2 or 15 to 26, **characterised in that** the spatial expansion of the volume of melting fluid (16) is a length (L) along the longitudinal axis (LA) of the volume of melting fluid (16) on the one hand and a width (B) which corresponds to the distance of the longitudinal axis (LA) of the volume of melting fluid (16) up to the cladding surface (M) of the latter on the other hand, and the expansion quotient UB lies within the range from 1 to 8, preferably 3 to 5.

28. Use according to any of Claims 2 or 15 to 27, **characterised in that** at least one heat distribution element (14a) is in the form of a heat-producing further heating element (13).

29. Use according to any of Claims 2 or 15 to 28, **characterised in that** the de-icing surfaces (15) of the at least one heat distribution element (14) are disposed substantially orthogonally to the melting axis (S) of the heating element (13).

30. Use according to Claim 29, **characterised in that** de-icing surfaces (15) of the at least one heat distribution element (14) are disposed offset in relation to one another along the melting axis (S) of the heating element (13).

31. Use according to any of Claims 2 or 15 to 30, **characterised in that** the de-icing surface (15) is shaped as a melting plate (15).

32. Use according to Claim 31, **characterised in that** the melting plate (15) has a substantially round, elliptical or polygonal outline.

33. Use according to Claim 31 or 32, **characterised in that** the melting plate (15) has a central fitting opening (49) through which the heating element (13) extends.

34. Use according to any of Claims 2 or 15 to 33, **characterised in that** the at least one heat distribution element (14) is in the form of a de-icing strip (14).

35. Use according to Claim 34, **characterised in that** the de-icing strip (14) is wound around the heating element in a spiral shape so as to form a heating screw.

36. Use according to any of Claims 2 or 15 to 35, **characterised in that** the cold start heating system (12) has a control unit (39) which is connected to at least one ice sensor (37) by means of which the aggregate state of the fluid (8) in the tank (2, 19, 46) can be recorded and a phase signal (38) characterising the aggregate state can be emitted on the one hand to the control unit (39) and on the other hand to the heating element (13), it being possible for the control unit (39) to emit to the heating element (13), depending on the phase signal (38), a heating signal (40) which transfers the heating element (13) from a rest state to a heat-producing operational state.

37. Use according to any of Claims 2 or 15 to 36, **characterised in that** the cold start heating system (12) has a closure element (21) which is designed to seal a retaining opening (22) of the tank, fluid tight, by means of which the volume of melting fluid (16) of the cold start heating system (12) can be introduced into the tank along a fitting direction (E).

38. Use according to Claim 37, **characterised in that** the closure element (21) is in the form of a cover (21).

39. Use according to Claim 37 or 38, **characterised in that** the closure element (21) has a removal opening (43) to which a fluid line (3) leading to the fluid consumer (5) can be joined or into which a removal apparatus (41) which extends through the removal opening (43) of the closure element (21) into the volume of melting fluid (16) can be inserted.

## Revendications

1. Utilisation d'un système de réservoir (53), pour fourniture d'un volume de démarrage à froid (V_{KS}) prédéterminé, nécessaire à un consommateur de liquide (5) après un démarrage à froid, d'une solution d'urée prévue en tant que liquide de fonctionnement (8) pour un catalyseur SCR, comprenant un réservoir principal (2) avec une ouverture de remplissage (6), au moyen de laquelle l'espace intérieur de réservoir (55) du réservoir principal (2) est susceptible d'être approvisionné avec un liquide de fonctionnement (8), comprenant un dispositif de mise en fusion (18, 54), qui présente un réservoir de fusion (19, 19a) entourant une enceinte à masse fondue (52) et une ouverture d'admission (57), au moyen de laquelle l'enceinte à masse fondue (52) est susceptible d'être remplie du liquide de fonctionnement (8) issu de l'espace intérieur de réservoir (55), ainsi qu'une ouverture de prélèvement (43), et comprenant un chauffage de démarrage à froid (12), qui comprend un élément chauffant (13) pour porter à fusion du liquide de fonctionnement ayant gelé dans l'enceinte à masse fondue (52), l'enceinte à masse fondue (52) étant au moins aussi grande que le volume de démarrage à froid (V_{KS}) et plus petite que l'espace intérieur de réservoir (55), le réservoir de fusion (19, 19a) étant disposé au niveau du réservoir principal ou dans ce dernier, le chauffage de démarrage à froid (12) présentant un élément chauffant (13) électrique, et une ouverture de prélèvement (43) du réservoir de fusion (19, 19a) étant une ouverture de prélèvement du système de réservoir (53), directement reliée à l'environnement du système de réservoir (53), le réservoir principal (2) présentant une ouverture de prélèvement (9) supplémentaire du système de réservoir (53), et du liquide de fonctionnement étant acheminé depuis le réservoir de fusion vers le consommateur de liquide uniquement tant que l'espace intérieur de réservoir du réservoir principal est encore givré, et le prélèvement du réservoir de fusion étant stoppé dès que le liquide de fonctionnement a également fondu dans l'espace intérieur de réservoir afin de prélever, en lieu et place, le liquide directement du réservoir principal par l'intermédiaire de l'ouverture de prélèvement (9) supplémentaire.

2. Utilisation selon la revendication 1, **caractérisée en ce que** le chauffage de démarrage à froid (12), pour la mise en fusion du liquide (8) déterminé pour le consommateur de liquide (5), dans des réservoirs de véhicules automobiles (2), comprend l'élément chauffant (13) générant de la chaleur lorsqu'il est en fonctionnement, ayant une puissance de chauffage (Pₘₐₓ) maximale, limitée, prédéterminée, et au moins un élément de distribution de chaleur (14), qui est relié de manière thermoconductrice à l'élément chauffant (13), et qui présente des surfaces de dégivrage (15), s'étendant en s'éloignant de l'élément chauffant, pénétrant dans le réservoir (2), surfaces de dégivrage par l'intermédiaire desquelles, en fonctionnement, de la chaleur est susceptible d'être transmise directement dans le liquide (8) ayant gelé dans le réservoir (2), les surfaces de dégivrage (15) couvrant un volume de liquide en fusion (16), dont le contenu correspond au moins à un volume de démarrage à froid (V_{KS}) de liquide fondu, devant être mis à disposition du consommateur de liquide (5) dans les limites d'une période de démarrage à froid (t_{KS}) définie, l'élément chauffant (13) étant réalisé sous forme d'élément chauffant (13) électrique, et **en ce que** la distance (D) entre les surfaces de dégivrage (15) est inférieure à un espacement de fusion (Dₘₐₓ), déterminé par l'épaisseur de couche de glace la plus grande possible, susceptible d'entrer en fusion complètement, dans les limites de la période de démarrage à froid (t_{KS}), avec la puissance de chauffage (Pₘₐₓ) maximale, la plus grande possible, limitée de manière prédéterminée, de l'élément chauffant (13), l'épaisseur de couche de glace étant celle du liquide (8), ayant gelé et se trouvant entre les surfaces de dégivrage (15), situé à une température minimale (Tₘᵢₙ) inférieure.

3. Utilisation selon la revendication 1 ou 3, **caractérisée en ce que** le dispositif de mise en fusion (54) est disposé dans l'espace intérieur de réservoir (55) du réservoir principal (2).

4. Utilisation selon la revendication 1 ou 2, **caractérisée en ce que** le dispositif de mise en fusion (54) est disposé extérieurement sur le réservoir principal (2).

5. Utilisation selon la revendication 3 ou 4, **caractérisée en ce que** le réservoir de fusion (19) est disposé au fond (56) du réservoir principal (2).

6. Utilisation (53) selon la revendication 3 ou 4, **caractérisée en ce que** le réservoir de fusion (19) est disposé contre l'enveloppe de réservoir (58) du réservoir principal (2).

7. Utilisation (53) selon l'une des revendications 1 à 6, **caractérisée en ce que** le réservoir de fusion (19) ne présente aucune soupape d'aération.

8. Utilisation (53) selon l'une quelconque des revendications citées ci-dessus, **caractérisée en ce que** le réservoir de fusion (19) est ouvert sur un côté.

9. Utilisation (53) d'un système de réservoir (53) selon l'une des revendications citées ci-dessus 1 à 8, **caractérisée en ce que** le réservoir de fusion (19) présente une soupape d'aération (59).

10. Utilisation (53) selon l'une des revendications citées ci-dessus, **caractérisée en ce que** le réservoir de fusion (19) et le réservoir principal (2) constituent un système de réservoir (53) d'une seule pièce.

11. Utilisation (53) selon l'une des revendications citées ci-dessus, **caractérisée en ce que** le réservoir de fusion (19) et le réservoir principal (2) sont des composants séparés d'un système de réservoir (53) modulaire.

12. Utilisation (53) selon l'une des revendications citées ci-dessus, **caractérisée en ce que** le chauffage de démarrage à froid (12) est disposé dans l'enceinte à masse fondue (52).

13. Utilisation (53) selon l'une des revendications citées ci-dessus, **caractérisée en ce que** le chauffage de démarrage à froid (12) est disposé sur la paroi extérieure du réservoir de fusion (19).

14. Utilisation (53) selon l'une des revendications citées ci-dessus, **caractérisée en ce que** le système de réservoir (53) présente un dispositif de chauffage (61) supplémentaire, pour mettre en fusion du liquide de fonctionnement ayant gelé dans l'espace intérieur de réservoir (55).

15. Utilisation selon la revendication 2, **caractérisée en ce que** le rapport d'espacement (D/Dₘₐₓ) est supérieur à 0,8, de préférence supérieur à 0,9.

16. Utilisation selon la revendication 2, **caractérisée en ce que** la surface de transmission de chaleur des surfaces de dégivrage (15), exprimée en cm², correspond au moins au volume de liquide fondu (16), exprimé en cm³.

17. Utilisation selon la revendication 16, **caractérisée en ce que** la surface de transmission de chaleur des surfaces de dégivrage (15), exprimée en cm², correspond au moins à 1,3 fois, de préférence à 2 fois, le volume de liquide fondu (16), exprimé en cm³.

18. Utilisation selon la revendication 2, **caractérisée en ce que** la puissance maximale (Pₘₐₓ), limitée de manière prédéterminée, est inférieure à une puissance minimale de mise en fusion (Pₘᵢₙ), multipliée par un facteur de fourniture de puissance de 1,4, déterminée par la quantité de chaleur la plus petite possible, suffisante pour porter à fusion le volume de démarrage à froid (V_{KS}) de liquide fondu de la température minimale (Tₘᵢₙ) inférieure et se référant à la période de démarrage à froid (t_{KS}).

19. Utilisation selon la revendication 18, **caractérisée en ce que** le facteur de fourniture de puissance est inférieur à 1,2, de préférence inférieur à 1,15.

20. Utilisation selon la revendication 2, **caractérisée en ce que** l'élément chauffant (13) électrique est un élément chauffant à caractéristique CTP.

21. Utilisation selon la revendication 2, **caractérisée en ce que** l'élément chauffant (13) électrique est un corps chauffant tubulaire.

22. Utilisation selon l'une des revendications 2 ou 15 à 21, **caractérisée en ce que** l'élément chauffant (13) est réalisé essentiellement sous forme de barre chauffante (13).

23. Utilisation selon l'une des revendications 2 ou 15 à 22, **caractérisée en ce que** les surfaces de dégivrage (15) couvrent un volume de liquide fondu (16) sensiblement en forme de cylindre, d'hexaèdre, de prisme ou de pyramide.

24. Utilisation selon l'une des revendications 2 ou 15 à 23, **caractérisée en ce que** l'élément chauffant (13) est disposé sensiblement centralement dans le volume de liquide fondu (16).

25. Utilisation selon l'une des revendications 2 ou 15 à 24, **caractérisée en ce que** l'élément chauffant (13) s'étend sensiblement parallèlement à l'axe longitudinal (LA) du volume de liquide fondu (16).

26. Utilisation selon la revendication 25, **caractérisée en ce que** l'élément chauffant (13) s'étend sensiblement coaxialement à l'axe longitudinal (LA) du volume de liquide fondu (16).

27. Utilisation selon l'une des revendications 2 ou 15 à 26, **caractérisée en ce que** l'étendue spatiale du volume de liquide fondu (16) présente une longueur (L) le long de l'axe longitudinal (LA) du volume de liquide fondu (16), d'une part, et une largeur (B), qui correspond à l'espacement entre l'axe longitudinal (LA) du volume de liquide fondu (16) jusqu'à sa surface d'enveloppe (M), d'autre part, et le quotient d'étendues UB est situé dans la fourchette allant de 1 à 8, de préférence de 3 à 5.

28. Utilisation selon l'une des revendications 2 ou 15 à 27, **caractérisée en ce qu'**au moins un élément de distribution de chaleur (14a) est réalisé sous forme d'élément chauffant (13) supplémentaire, thermogénérateur.

29. Utilisation selon l'une des revendications 2 ou 15 à 28, **caractérisée en ce que** les surfaces de dégivrage (15) du au moins un élément de distribution de chaleur (14) sont disposées perpendiculairement à l'axe de fusion (S) de l'élément chauffant (13).

30. Utilisation selon la revendication 29, **caractérisée en ce que** les surfaces de dégivrage (15) du au moins un élément de distribution de chaleur (14) sont disposées de façon mutuellement décalée, le long de l'axe de fusion (S) de l'élément chauffant (13).

31. Utilisation selon l'une des revendications 2 ou 15 à 30, **caractérisée en ce que** la surface de dégivrage (15) est façonnée sous forme de plaque de mise en fusion (15).

32. Utilisation selon la revendication 31, **caractérisée en ce que** la plaque de mise en fusion (15) présente une périphérie sensiblement ronde, elliptique ou polygonale.

33. Utilisation selon la revendication 31 ou 32, **caractérisée en ce que** la plaque de mise en fusion (15) présente une ouverture de placement (49) centrale, à travers laquelle l'élément chauffant (13) s'étend.

34. Utilisation selon l'une des revendications 2 ou 15 à 33, **caractérisée en ce que** le au moins un élément de distribution de chaleur (14) est réalisé sous forme de ruban de dégivrage (14).

35. Utilisation selon la revendication 34, **caractérisée en ce que** le ruban de dégivrage (14) est enroulé en spirale autour de l'élément chauffant, en formant un serpentin chauffant.

36. Utilisation selon l'une des revendications 2 ou 15 à 35, **caractérisée en ce que** le chauffage de démarrage à froid (12) présente une unité de commande (39), reliée, d'une part, à au moins un capteur de glace ou givre (37), au moyen duquel l'état d'agrégat du liquide (8) présent dans le réservoir (2, 19, 46) est susceptible d'être détecté, et au moyen duquel un signal de phase (38), caractérisant l'état d'agrégat, est susceptible d'être délivré à l'unité de commande (39), et est reliée, d'autre part, à l'élément chauffant (13), sachant que, au moyen de l'unité de commande (39), en fonction du signal de phase (38), un signal de chauffage (40), faisant passer l'élément chauffant (13) d'un état de repos en un état de fonctionnement, générant de la chaleur, est susceptible d'être délivré à l'élément chauffant (13).

37. Utilisation selon l'une des revendications 2 ou 15 à 36, **caractérisée en ce que** le chauffage de démarrage à froid (12) présente un élément de fermeture (21), équipé de manière à pouvoir fermer de manière étanche aux fluides une ouverture de réception (22), au moyen de laquelle le volume de liquide en fusion (16) du chauffage de démarrage à froid (12) est susceptible d'être introduit dans le réservoir, et se déplaçant le long d'une direction de montage (E), du réservoir.

38. Utilisation selon la revendication 37, **caractérisée en ce que** l'élément de fermeture (21) est réalisé sous forme de couvercle (21).

39. Utilisation selon la revendication 37 ou 38, **caractérisée en ce que** l'élément de fermeture (21) présente une ouverture de prélèvement (43), à laquelle une conduite à fluide (3), menant au consommateur de liquide (5), est susceptible d'être raccordée, ou dans laquelle un dispositif de prélèvement (41), s'étendant à travers l'ouverture de prélèvement (43) de l'élément de fermeture (21), en pénétrant dans le volume de liquide en fusion (16), est susceptible d'être placé.
